# EUROPEAN PATENT APPLICATION

(11) **EP 4 597 741 A1**
(43) Date of publication of application: **06.08.2025**
(21) Application number: 23928311.2
(22) Date of filing: 11.10.2023
(51) Int. Cl.: H01M 50/593, H01M 50/543, H01M 50/188, H01M 50/15, H01M 10/04

(54) **BATTERY CELL, BATTERY, AND ELECTRICAL DEVICE**

(30) Priority: 17.03.2023 CN 202310265321
(71) Applicant: Contemporary Amperex Technology (Hong Kong) Limited, Central (HK)
(72) Inventor: ZHOU, Wenlin, Ningde, Fujian 352100 (CN); XU, Liangfan, Ningde, Fujian 352100 (CN); YANG, Daowei, Ningde, Fujian 352100 (CN); LI, Quankun, Ningde, Fujian 352100 (CN); WANG, Peng, Ningde, Fujian 352100 (CN)
(74) Representative: Thoma, Michael
(86) International application number: PCT/CN2023/123974
(87) International publication number: WO 2024/193006

(57) **Abstract**

A battery cell (10), a battery (100), and a power-consuming apparatus are provided. The battery cell (10) includes a housing (11), an electrode terminal (12), a first connecting member (13), and an insulating film (14). A first end wall (110) is provided with a first through-hole (1101), and the first through-hole (1101) passes through the first end wall (110) in a thickness direction of the first end wall (110). The electrode terminal (12) is mounted in the first through-hole (1101). At least a part of the first connecting member (13) is located on an outer side of the first end wall (110) in the thickness direction, and the first connecting member (13) is disposed in a circumferential direction of the electrode terminal (12) and is connected to the electrode terminal (12). The insulating film (14) covers at least a part of an outer surface of the first end wall (110), the insulating film (14) is provided with a second through-hole (140) for exposing the electrode terminal (12), and the insulating film (14) is connected to the first connecting member (13). The technical solution can improve reliability of the battery.

## Description

### CROSS-REFERENCE TO RELATED APPLICATIONS

This application claims priority to Chinese Patent Application No. 202310265321.3, entitled "BATTERY CELL, BATTERY, AND POWER-CONSUMING APPARATUS" and filed on March 17, 2023, which is incorporated herein by reference in its entirety.

### TECHNICAL FIELD

This application relates to the field of battery technologies, and specifically, to a battery cell, a battery, and a power-consuming apparatus.

### BACKGROUND

Energy saving and emission reduction are crucial to the sustainable development of the automobile industry, and electric vehicles become an important component of the sustainable development of the automobile industry due to their advantages of energy saving and environmental protection. For the electric vehicles, battery technologies are an important factor about their development.

During the development of the battery technologies, how to improve reliability of batteries is a technical problem to be resolved urgently in the battery technologies.

### SUMMARY

This application provides a battery cell, a battery, and a power-consuming apparatus, which can improve reliability of the battery.

This application is implemented by using the following technical solutions:

According to a first aspect, this application provides a battery cell. The battery cell includes a housing, an electrode terminal, a first connecting member, and an insulating film. The first end wall is provided with a first through-hole, and the first through-hole passes through the first end wall in a thickness direction of the first end wall. The electrode terminal is mounted in the first through-hole. The first connecting member is at least partially located on an outer side of the first end wall in the thickness direction, and the first connecting member is disposed in a circumferential direction of the electrode terminal and is connected to the electrode terminal. The insulating film covers at least a part of an outer surface of the first end wall, where the insulating film is provided with a second through-hole for exposing the electrode terminal, and the insulating film is connected to the first connecting member.

In the foregoing solution, the battery cell includes the first connecting member and the insulating film. The first connecting member is disposed in the circumferential direction of the electrode terminal and is connected to the electrode terminal. The insulating film is configured to cover at least a part of the outer surface of the first end wall and is provided with the second through-hole for exposing the electrode terminal, and the insulating film is connected to the first connecting member. In an aspect, the insulating film can protect the first end wall, to reduce a risk that the first end wall is damaged. In another aspect, the second through-hole is disposed on the insulating film, so that the electrode terminal can be exposed, to output and input of electric energy of the battery cell. In still another aspect, compared with a solution in which connection stability between an insulating film and an electrode terminal made of a metallic material is poor, the insulating film covers at least a part of the outer surface of the first end wall, in collaboration with connecting the insulating film to the first connecting member, so that a part on the first end wall on which the electrode terminal is mounted can be effectively protected, to reduce a risk that an electrolyte inside the battery cell leaks from the part on the first end wall on which the electrode terminal is mounted, or reduce, when an electrolyte leaks from the part on the first end wall on which the electrode terminal is mounted, a risk that the electrolyte leaks out of the insulating film and pollutes an object or an environment outside the battery cell, thereby improving reliability of the battery.

According to some embodiments of this application, the insulating film is in a hot-melting connection to the first connecting member.

In the foregoing solution, in some embodiments, the first connecting member may be a component capable of performing hot-melting connection. For example, the first connecting member may be a rubber member. The insulating film and the first connecting member are connected through hot-melting. In an aspect, connection efficiency between the insulating film and the first connecting member can be improved. In another aspect, good connection stability between the insulating film and the first connecting member can be achieved, so that the part on the first end wall on which the electrode terminal is mounted is well protected, thereby improving reliability of the battery.

According to some embodiments of this application, a part of the insulating film surrounding the second through-hole is connected to the first connecting member.

In the foregoing solution, the part of the insulating film connected to the first connecting member is disposed around the second through-hole, so that the part on the first end wall on which the electrode terminal is mounted can be effectively well protected, thereby improving reliability of the battery.

According to some embodiments of this application, the first connecting member is an insulating member. The first connecting member includes a base plate and a side plate, the base plate is disposed between the electrode terminal and the first end wall in the thickness direction, the base plate is provided with a third through-hole for the electrode terminal to pass through, the side plate is disposed around the electrode terminal, and the side plate is connected to the base plate. The insulating film is connected to the side plate.

In the foregoing solution, the first connecting member is an insulating member, and has an insulating property. In the thickness direction, the base plate of the insulating member can effectively separate the electrode terminal and the first end wall to insulate the electrode terminal from the first end wall. In the circumferential direction of the electrode terminal, the side plate of the insulating member is disposed around the electrode terminal, so that the first connecting member can be disposed around the electrode terminal, thereby well protecting the part on the first end wall on which the electrode terminal is mounted. Therefore, the first connecting member is an insulating member. In an aspect, connection stability between the insulating member and the insulating film is good, thereby effectively reducing a risk of leakage of the electrolyte. In another aspect, mutual insulation between the electrode terminal and the first end wall can be implemented, thereby reducing a short-circuit risk of the battery cell, and further improving reliability of the battery.

According to some embodiments of this application, the side plate has a first surface away from the first end wall in the thickness direction, and the insulating film is connected to the first surface.

In the foregoing solution, the first surface is in a direction away from the first end wall. In some embodiments, the first surface protrudes relative to the surface of the base plate on a same side in the thickness direction, that is, the side plate is higher than the base plate, and therefore, can wrap at least a part of an outer peripheral surface of the electrode terminal, to reduce a risk that the electrode terminal is short-circuited to the first end wall. In some embodiments, the first surface may be a plane, and the inner surface of the insulating film may be connected to the first surface in a surface contact manner, to provide a larger connection area compared with a case that the end face of the insulating film is connected to the side wall of the side plate in a line contact manner, so that a connection difficulty between the inner surface of the insulating film and the first surface is low, which can improve connection efficiency between the insulating film and the side plate, and improve manufacturing efficiency of the battery.

According to some embodiments of this application, a convex portion is formed on an outer peripheral surface of the side plate, and the insulating film is connected to the convex portion.

In the foregoing solution, the convex portion is disposed on the outer peripheral surface of the side plate, and the convex portion is connected to a part of the insulating film located around the second through-hole. In an aspect, compared with the case that the insulating film is connected to one end of the side plate away from the base plate, because the insulating film does not need to be connected to one end of the side plate higher than the convex portion, a use area of the insulating film can be reduced, thereby reducing costs. In another aspect, because the convex portion is disposed on the outer peripheral surface of the side plate, a creepage distance between the electrode terminal and the first end wall can be increased, thereby improving an effect of a mutual insulating film of the electrode terminal and the first end wall, and further improving reliability of the battery.

According to some embodiments of this application, the first end wall has the outer surface and an inner surface that are disposed opposite to each other in the thickness direction. The outer surface of the first end wall is provided with a first groove, at least a part of the convex portion is accommodated in the first groove, and a connecting surface between the insulating film and the convex portion is located in the first groove.

In the foregoing solution, when the battery cell is inverted and used, that is, when the first end wall is a part of the housing closest to the ground during use, the first groove is disposed on the outer surface of the first end wall and at least a part of the convex portion is accommodated in the first groove, so that a part of the insulating film connected to the convex portion is not a lowest part of the battery cell, thereby reducing a risk that the electrolyte leaking from the part on the first end wall on which the electrode terminal is mounted, or the electrolyte leaking from another part infiltrates into the part of the insulating film connected to the convex portion. Therefore, there is a stable connection between the insulating film and the convex portion, thereby reducing a risk that the electrolyte leaks or leaks outward. Therefore, the battery has high reliability.

According to some embodiments of this application, the battery cell further includes a sealing member, and the sealing member is disposed between the first end wall and the insulating member.

In the foregoing solution, the sealing member is disposed between the first end wall and the insulating member, so that a risk that the electrolyte flows between the first end wall and the insulating member and acts on the electrode terminal can be reduced, thereby reducing a risk that the battery cell is short-circuited due to short-circuiting between the electrode terminal and the first end wall, and improving reliability of the battery.

According to some embodiments of this application, the insulating member includes a bump, the first end wall is provided with a sealing groove, the bump is inserted in the sealing groove, and the sealing member fills a void between the bump and the sealing groove.

In the foregoing solution, the bump is disposed and the sealing member fills between the bump and the sealing groove, so that a risk that the electrolyte flows between the first end wall and the insulating member and acts on the electrode terminal can be further reduced, thereby reducing a risk that the electrode terminal is short-circuited to the first end wall, and improving reliability of the battery.

According to some embodiments of this application, the bump and the sealing groove are both annular and are disposed in the circumferential direction of the electrode terminal.

In the foregoing solution, the bump and the sealing groove are both annular and are disposed in the circumferential direction of the electrode terminal, so that the electrode terminal can be protected well in the circumferential direction of the electrode terminal, and a risk that the electrolyte flows between the first end wall and the insulating member and acts on the electrode terminal can be effectively reduced. Therefore, the battery has high reliability.

According to some embodiments of this application, the electrode terminal includes a first end face facing away from the first end wall in the thickness direction and an outer peripheral surface disposed around the first end face; and the first connecting member is disposed on the first end face and/or the outer peripheral surface of the electrode terminal.

In the foregoing solution, the first connecting member is disposed on the first end face and/or the outer peripheral surface of the electrode terminal, and the insulating film is connected to the first connecting member, in collaboration with covering, by the insulating film, at least a part of the outer surface of the first end wall, so that an interfacial part between the electrode terminal and the first end wall can be protected, thereby reducing a risk that the electrolyte inside the battery cell leaks and leaks out of the insulating film, and further improving reliability of the battery.

According to some embodiments of this application, a surface of the electrode terminal is provided with a second groove, the second groove extends in the circumferential direction of the electrode terminal, and the first connecting member is disposed in the second groove.

In the foregoing solution, the second groove is disposed on the surface of the electrode terminal, and the first connecting member is disposed in the second groove, so that connection stability between the first connecting member and the electrode terminal can be improved, and a risk that the first connecting member is detached from the electrode terminal can be reduced. Therefore, the insulating film effectively protects the interfacial part between the electrode terminal and the first end wall, thereby reducing a risk that the electrolyte inside the battery cell leaks and leaks out of the insulating film, and further improving reliability of the battery.

According to some embodiments of this application, the second groove is disposed on the first end face.

In the foregoing solution, the first end face may be a top surface of the electrode terminal, and the second groove is disposed on the top surface of the electrode terminal, which can reduce difficulty in disposing the second groove, improve manufacturing efficiency of the electrode terminal, and further improve manufacturing efficiency of the battery.

According to some embodiments of this application, the second groove extends to the outer peripheral surface of the electrode terminal.

In the foregoing solution, the second groove extends to the outer peripheral surface of the electrode terminal, so that a risk that the insulating film protrudes relative to the first end face can be reduced, and an entire volume of the battery cell can be prevented from increasing. Therefore, the battery cell has a high volume energy density.

According to some embodiments of this application, the insulating film does not exceed the first end face in the thickness direction.

In the foregoing solution, the insulating film is limited to being not higher than the first end face, thereby facilitating connection between the first end face and an external component, and facilitating input and output of electric energy. In some embodiments, a sum of a thickness of the first connecting member and a thickness of the insulating film is less than a depth of the second groove, so that the insulating film can be prevented from protruding out of the first end face, connection between the first end face and an external component is facilitated, and electric energy is normally inputted/outputted.

According to some embodiments of this application, the second groove is disposed on the outer peripheral surface of the electrode terminal.

In the foregoing solution, the second groove is disposed on the outer peripheral surface of the electrode terminal and may surround the electrode terminal. In an aspect, the electrode terminal can be connected to the insulating film and connection stability is good, so that the insulating film effectively protects the interfacial part between the electrode terminal and the first end wall, thereby reducing a risk that the electrolyte inside the battery cell leaks and leaks out of the insulating film, and further improving reliability of the battery. In another aspect, the first end face of the electrode terminal can be exposed, to make it convenient for the first end face to be connected to an external component, thereby facilitating normal input and output of electric energy.

According to some embodiments of this application, the battery cell further includes a pressure-relief portion and a second connecting member, the pressure-relief portion is disposed on a wall portion of the housing, and the insulating film covers the pressure-relief portion. The second connecting member is disposed on the wall portion of the housing and is disposed around the pressure-relief portion, and the second connecting member is connected to the insulating film.

In the foregoing solution, the second connecting member is disposed around the pressure-relief portion, and the insulating film and the second connecting member are connected to each other, so that a risk that the electrolyte leaking between the pressure-relief portion and the first end wall leaks out of the insulating film can be reduced. Therefore, the battery has high reliability.

According to some embodiments of this application, the wall portion of the housing is provided with a third groove, the third groove is disposed around the pressure-relief portion, and the second connecting member is disposed in the third groove and is in a hot-melting connection to the insulating film.

In the foregoing solution, the third groove surrounding the pressure-relief portion is disposed on the outer surface of the wall portion of the housing, and the second connecting member is disposed in the third groove, so that the connection stability between the second connecting member and the housing can be improved. In addition, hot-melting is performed between the insulating film and the second connecting member, so that the connection stability between the second connecting member and the insulating film can be improved, and a risk that the electrolyte leaking between the pressure-relief portion and the wall portion of the housing leaks out of the insulating film can be effectively reduced. Therefore, the battery has high reliability.

According to some embodiments of this application, the pressure-relief portion is disposed on the first end wall.

In the foregoing solution, the electrode terminal and the pressure-relief portion are both disposed on the first end wall. In an aspect, when the first end wall is an independently manufactured component, because the electrode terminal and the pressure-relief portion are both disposed on the first end wall, the electrode terminal and the pressure-relief portion may be simultaneously manufactured or assembled, thereby improving manufacturing efficiency of the battery cell, and further improving manufacturing efficiency of the battery. In another aspect, because the electrode terminal and the pressure-relief portion are both disposed on the first end wall, connection of the insulating film to the first connecting member and the second connecting member can be facilitated, thereby improving assembly efficiency of the insulating film.

According to some embodiments of this application, the wall portion of the housing is provided with a liquid injection hole and a plugging member, the plugging member plugs the liquid injection hole, and the insulating film covers the plugging member; and the battery cell further includes a third connecting member, the third connecting member is disposed on the wall portion of the housing and is disposed around the liquid injection hole, and the third connecting member is connected to the insulating film.

In the foregoing solution, the third connecting member is disposed around the liquid injection hole, and the insulating film and the third connecting member are connected to each other, so that a risk that the electrolyte leaking from the liquid injection hole or between the plugging member and the first end wall leaks out of the insulating film can be reduced. Therefore, the battery has high reliability.

According to some embodiments of this application, the wall portion of the housing is provided with a fourth groove, the fourth groove is disposed around the liquid injection hole, and the third connecting member is disposed in the fourth groove and is in a hot-melting connection to the insulating film.

In the foregoing solution, the fourth groove surrounding the liquid injection hole is disposed on the wall portion of the housing, and the third connecting member is disposed in the fourth groove, so that the connection stability between the third connecting member and the housing can be improved. In addition, hot-melting connection is performed between the insulating film and the third connecting member, so that the connection stability between the third connecting member and the insulating film can be improved, and a risk that the electrolyte leaking from the liquid injection hole or between the plugging member and the wall portion of the housing leaks out of the insulating film can be effectively reduced. Therefore, the battery has high reliability.

According to some embodiments of this application, the liquid injection hole is disposed on the first end wall.

In the foregoing solution, the electrode terminal and the liquid injection hole are both disposed on the first end wall. In an aspect, when the first end wall is an independently manufactured component, because the electrode terminal and the liquid injection hole are both disposed on the first end wall, the electrode terminal and the pressure-relief portion may be simultaneously assembled or manufactured, thereby improving manufacturing efficiency of the battery cell, and further improving manufacturing efficiency of the battery. In another aspect, connection of the insulating film to the first connecting member and the third connecting member can be facilitated, thereby improving assembly efficiency of the insulating film.

According to some embodiments of this application, the housing further includes a side wall, and the side wall is disposed around the first end wall. the insulating film covers the outer surface of the first end wall and covers at least a part of an outer surface of the side wall.

In the foregoing solution, when the battery cell is inverted and used, that is, when the first end wall is the wall of the housing closest to the ground, the insulating film covers the outer wall surface of the first end wall and covers at least a part of the outer surface of the side wall, and an electrolyte leaking from the housing, between the housing and the electrode terminal, or between the housing and another component can be held, thereby preventing the electrolyte from leaking outward. Therefore, the battery has high reliability.

According to some embodiments of this application, the housing further includes a second end wall, the second end wall is disposed opposite to the first end wall, and the side wall connects the first end wall and the second end wall. the insulating film covers at least a part of an outer surface of the second end wall.

In the foregoing solution, the insulating film covers at least a part of the outer surface of the second end wall, so that the insulating film is stably attached to the outer surface of the housing, thereby reducing a risk that the insulating film falls off from the housing. Therefore, the battery has high reliability.

According to some embodiments of this application, a part of the outer surface of the second end wall is not covered by the insulating film.

In the foregoing solution, a part of the outer surface of the second end wall is configured to be not covered by the insulating film, to make it convenient for the part not covered by the insulating film to be connected to an external connection structure. For example, the part not covered by the insulating film can be effectively bonded to a wall surface of a box or a chassis of a vehicle.

According to a second aspect, this application further provides a battery. The battery includes any battery cell according to the first aspect.

According to a third aspect, this application further provides a power-consuming apparatus. The power-consuming apparatus includes the battery according to the second aspect and/or the battery cell according to the first aspect.

The above description only refers to an overview of the technical solution of this application. In order to understand the technical means of this application more clearly, it can be implemented according to the content of the description. In order to make the above-mentioned and other purposes, features and advantages of this application more apparent, the specific implementations of this application are listed below.

### BRIEF DESCRIPTION OF THE DRAWINGS

To describe the technical solutions of the embodiments of this application more clearly, the following briefly describes the accompanying drawings required for describing the embodiments. It should be understood that, the following accompanying drawings show only some embodiments of this application, which cannot be considered as limitation on the scope. A person of ordinary skill in the art may still derive other accompanying drawings from the accompanying drawings without creative efforts.
FIG. 1 is a schematic diagram of a structure of a vehicle according to some embodiments of this application;
FIG. 2 is a three-dimensional exploded view of a battery according to some embodiments of this application;
FIG. 3 is a three-dimensional view of a battery cell according to some embodiments of this application;
FIG. 4 is a three-dimensional exploded view of a battery cell having an insulating film hidden according to some embodiments of this application;
FIG. 5 is an internal schematic diagram of a battery cell according to some embodiments of this application;
FIG. 6 is an enlarged view at a position A in FIG. 5;
FIG. 7 is a schematic diagram of an insulating film and an insulating member according to some other embodiments of this application;
FIG. 8 is a schematic diagram of an insulating film and an insulating member according to still some other embodiments of this application;
FIG. 9 is an internal schematic diagram of a battery cell according to yet some other embodiments of this application;
FIG. 10 is an enlarged view at a position B in FIG. 9;
FIG. 11 is an enlarged view at a position C in FIG. 9;
FIG. 12 is an enlarged view at a position D in FIG. 9;
FIG. 13 is a schematic diagram of an insulating film and a housing according to some embodiments of this application; and
FIG. 14 is a schematic diagram of a process in which an insulating film is folded over a housing according to some embodiments of this application.

Reference numerals: 10-Battery cell; 10a-Electrode assembly; 11-Housing; 110-First end wall; 1101-First through-hole; 1102-First groove; 1103-Third groove; 1104-Liquid injection hole; 1105-Fourth groove; z-Thickness direction; 12-Electrode terminal; 120-Second groove; 121-First end face; 13-First connecting member; 13A-Insulating member; 130-Base plate; 131-Side plate; 1310-Convex portion; 132-Bump; 13C-Insulating structure; 14-Insulating film; 140-Second through-hole; 15-Sealing member; 16-Pressure-relief portion; 17-Second connecting member; 18-Plugging member; 19-Third connecting member; 20-Side wall; 21-Second end wall; 201-First side wall; 203-Third side wall; 30-Box; 31-Upper box; 32-Lower box; 41-First part; 42-Second part; 44-Fourth part; 46-Sixth part; 47-Seventh part; 48-Eighth part; 50-Tenth part; 51-Eleventh part; 61-First broken line; 62-Second broken line; 63-Third broken line; 64-Fourth broken line; 65-Fifth broken line; 66-Sixth broken line; 67-Seventh broken line; 1000-Vehicle; 100-Battery; 200-Controller; 300-Motor.

### DETAILED DESCRIPTION

In order to make the objectives, technical solutions, and advantages of the embodiments of this application clearer, the technical solutions in the embodiments of this application will be clearly described with reference to the accompanying drawings in the embodiments of this application. Obviously, it is a part of the embodiments of this application, but not all the embodiments. All other embodiments obtained by a person of ordinary skill in the art based on the embodiments of this application without making creative efforts shall fall within the protection scope of this application.

Unless otherwise defined, all technical and scientific terms used in this application have same meanings as commonly understood by a person skilled in the technical field of this application. The terms used in the claimed specification in this application are merely for an objective of describing specific embodiments, and are not intended to limit this application. The terms "include", "include" and any variations thereof in the specification and claims of this application and in the above descriptions of the accompanying drawings are intended to cover non-exclusive inclusion. In the specification and claims, or accompanying drawings of this application, the terms "first", "second", or the like are intended to distinguish between different objects but do not indicate a particular order or primary-secondary relationship.

Reference to "an embodiment" in this application means that a particular feature, structure or characteristic described in combination with the embodiment may be included in at least one embodiment of this application. The appearances of the phrase in various places in the specification are not necessarily all referring to the same embodiment, nor a separate or alternative embodiment that is mutually exclusive of other embodiments.

In the description of this application, it should be noted that unless otherwise explicitly specified or defined, the terms such as "mount", "connect", "connection", and "attach" should be understood in a broad sense. For example, the connection may be a fixed connection, a detachable connection, or an integral connection; or the connection may be a direct connection, an indirect connection through an intermediary, or internal communication between two components. A person of ordinary skill in the art may understand specific meanings of the terms in the present disclosure according to specific situations.

The term "and/or" in this application describes only an association relationship for describing associated objects and represents that three relationships may exist. For example, A and/or B may represent the following three cases: Only A exists, both A and B exist, and only B exists. In addition, in this application, the character "/" usually indicates an "or" relationship between the associated objects.

In the embodiments of this application, same reference numerals represent same components, and for brevity, detailed descriptions of same components are omitted in different embodiments. It should be understood that the dimensions, such as the thickness, the length, and the width, of various components in the embodiments of this application and the dimensions such as the entire thickness, length, and the width, of an integrated apparatus shown in the accompanying drawings are merely exemplary descriptions, and should not be construed as any limitation on this application.

"Plurality of" appearing in this application means two or more (including two).

In this application, a battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like, which is not limited in the embodiments of this application. The battery cell may be cylindrical, flat, cuboid, or in other shapes, which is not limited in the embodiments of this application either. Generally, battery cells are divided into three types according to encapsulating methods: cylindrical battery cells, cuboid battery cells, and soft package battery cells, which is not limited in the embodiments of this application either.

A battery mentioned in embodiments of this application is a single physical module including one or more battery cells to provide a higher voltage and a higher capacity. For example, the battery provided in this application may include a battery module, a battery pack, or the like. The battery generally includes a box for packaging the one or more battery cells. The box can prevent liquids or other foreign objects from affecting the charging or discharging of the battery cells.

The battery cell includes an electrode assembly and an electrolyte, and the electrode assembly is formed by a positive electrode plate, a negative electrode plate, and a separator. The battery cell works mainly relying on the movement of metal ions between the positive electrode plate and the negative electrode plate. The positive electrode plate includes a positive electrode current collector and a positive electrode active substance layer, the positive electrode active substance layer is coated to a surface of the positive electrode current collector, the positive electrode current collector not coated with the positive electrode active substance layer protrudes out of the positive electrode current collector already coated with the positive electrode active substance layer, and the positive electrode current collector not coated with the positive electrode active substance layer is used as a positive electrode tab. By using the lithium-ion battery as an example, a material of the positive electrode current collector may be aluminum, and a positive electrode active substance may be lithium cobalt oxide, lithium iron phosphate, ternary lithium, lithium manganese oxide, or the like. The negative electrode plate includes a negative electrode current collector and a negative electrode active substance layer, a surface of the negative electrode current collector is coated with the negative electrode active substance layer, the negative electrode current collector not coated with the negative electrode active substance layer protrudes from the negative electrode collector already coated with the negative electrode active substance layer, and the negative electrode current collector not coated with the negative electrode active substance layer is used as a negative electrode tab. A material of the negative electrode current collector may be copper, and a negative electrode active substance may be carbon, silicon, or the like. To cause fusing not to occur when a large current passed through, there are a plurality of positive electrode tabs and the positive electrode tabs are laminated, and there are a plurality of negative electrode tabs and the negative electrode tabs are laminated. The separator may be made of a material such as polypropylene (PP), polyethylene (PE), or the like. In addition, the electrode assembly may be either of a winding type structure or a stacked structure, which is not defined in the embodiments of this application.

Nowadays, from the perspective of development of the market situation, the batteries are applied increasingly. The batteries are not only used in energy storage power systems such as water power plant, fire power plant, wind power plant and solar power plant, but also in electric transportations such as electric bicycles, electric motorcycles, electric vehicles, as well as in military equipment, aerospace and other fields. With continuous expansion of application fields of batteries, market demands for batteries are also expanding.

Development of battery technologies needs to consider design factors in many aspects, for example, performance parameters such as a battery life, an energy density, a discharging capacity, and a charging/discharging rate. In addition, reliability of batteries needs to be further considered. However, reliability of current batteries is poor.

A battery cell includes a housing and an electrode terminal. The housing includes a first end wall, the first end wall is provided with a first through-hole, and the electrode terminal is mounted in the first through-hole, to output and input electric energy of the battery cell. However, a part of the first end wall on which the electrode terminal is mounted is a weak part (that is, a part easily broken by an external force) of the battery cell. An electrolyte easily leaks from the weak part, and the leaking electrolyte easily electrically connects the electrode terminal and the first end wall, causing a short-circuit of the battery cell, or causing pollution to an object or environment outside the battery cell. For example, in a battery, the leaking electrolyte may pollute another battery cell in a box. When the battery cell is inverted and used, the first end wall is a part of the housing closest to the ground. Due to the gravity, leakage of the electrolyte from the part of the first end wall on which the electrode terminal is mounted is especially prominent. Consequently, reliability of the battery is low.

In view of this, to resolve the problem that the electrolyte easily leaks from the part of the first end wall on which the electrode terminal is mounted, some embodiments of this application design a battery cell. The battery cell includes a housing, an electrode terminal, a first connecting member, and an insulating film. The first connecting member is at least partially located on an outer side of the first end wall in the thickness direction, and the first connecting member is disposed in a circumferential direction of the electrode terminal and is connected to the electrode terminal. The insulating film covers at least a part of an outer surface of the first end wall, where the insulating film is provided with a second through-hole for exposing the electrode terminal, and the insulating film is connected to the first connecting member.

In the foregoing solution, the insulating film covers at least a part of the first end wall, in collaboration with connecting the insulating film to the first connecting member, so that the part of the first end wall on which the electrode terminal is mounted can be held, to protect a part on the first end wall on which the electrode terminal is mounted, and a risk that the electrolyte leaks from the part on the first end wall on which the electrode terminal is mounted can be reduced, or, a risk that the electrolyte leaks out of the insulating film and pollutes an object or an environment outside the battery cell can be reduced due to disposition of the insulating film when the electrolyte leaks from the part on the first end wall on which the electrode terminal is mounted, thereby improving reliability of the battery.

The technical solutions described in the embodiments of this application are applicable to a battery and a power-consuming apparatus using a battery.

The power-consuming apparatus may be a vehicle, a mobile phone, a portable device, a notebook computer, a ship, a spacecraft, an electric toy, a power tool, and the like. The spacecraft includes an airplane, a rocket, a space shuttle, a spaceship, and the like; the electronic toy includes a fixed or mobile electronic toy, such as a game console, an electric vehicle toy, an electric ship toy, an electric aircraft toy, and the like; and the power tool includes a metal-cutting power tool, a grinding power tool, an assembly power tool, and a railway power tool, such as an electric drill, an electric grinder, an electric wrench, an electric screwdriver, an electric hammer, an electric impact drill, a concrete vibrator, an electric planer, and the like. The foregoing power-consuming apparatus is not specifically limited in the embodiments of this application.

For ease of description, the following embodiments are described by using an example in which the power-consuming apparatus is a vehicle 1000.

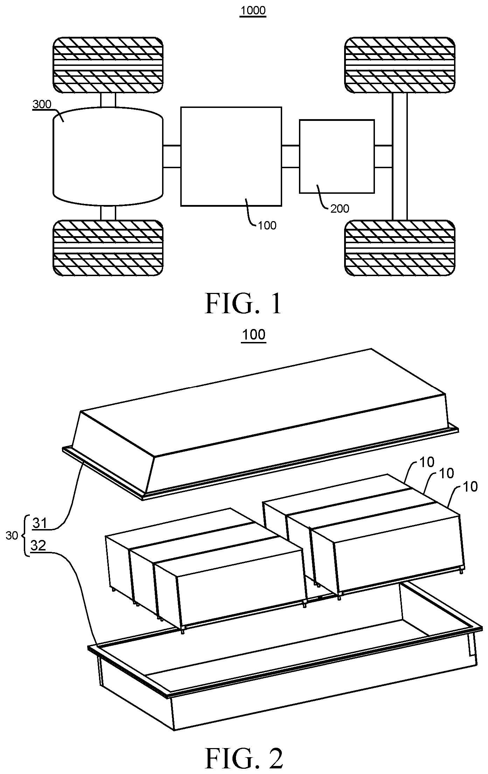

Referring to FIG. 1, FIG. 1 is a schematic diagram of a structure of a vehicle 1000 according to some embodiments of this application. The vehicle 1000 may be a fuel powered vehicle, a gas powered vehicle, or a new energy vehicle. The new energy vehicle may be a pure electric vehicle, a hybrid electric vehicle, or an extended range vehicle, etc. The vehicle 1000 is internally provided with a battery 100. The battery 100 may be arranged at the bottom, head, or tail of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation, and traveling of the vehicle 1000.

In some embodiments of this application, the battery 100 can not only serve as a power supply for operating the vehicle 1000, but can also serve as a power supply for driving the vehicle 1000, in place of or partially in place of fuel or natural gas, to provide driving power for the vehicle 1000.

Referring to FIG. 2, FIG. 2 is a three-dimensional exploded view of a battery 100 according to some embodiments of this application. The battery 100 includes a box 30 and battery cells 10, where the battery cells 10 are accommodated in the box 30. The box 30 is configured to provide an accommodating space for the battery cells 10. The box 30 may use a variety of structures. In some embodiments, the box 30 may include an upper box 31 and a lower box 32, the upper box 31 and the lower box 32 cover each other, and the upper box 31 and the lower box 32 jointly define the accommodating space for accommodating the battery cells 10. The lower box 32 may be a hollow structure with one end being open, the upper box 31 may be a plate-like structure, and the upper box 31 covers an open side of the lower box 32, so that the upper box 31 and the lower box 32 jointly define the accommodating space. Alternatively, the upper box 31 and the lower box 32 each may be a hollow structure with one side being open, and an open side of the upper box 31 covers an open side of the lower box 32. Certainly, the box 30 formed by the upper box 31 and the lower box 32 may be in various shapes, such as a cylinder, and a cuboid.

In the battery 100, there may be a plurality of battery cells 10, and the plurality of battery cells 10 can be connected in series, parallel, or series-parallel. Series-parallel connection means that both series connection and parallel connection exist among the plurality of battery cells 10. The plurality of battery cells 10 may be directly connected in series, parallel, or series-parallel together, and then the whole formed by the plurality of battery cells 10 may be accommodated in the box 30. Certainly, the battery 100 may also be in the form of a battery module formed by the plurality of battery cells 10 that are first connected in series, parallel, or series-parallel. The plurality of battery modules are then connected in series, parallel, or series-parallel to form a whole and accommodated in the box 30. The battery 100 may also include other structures, for example, the battery 100 may also include a bus component for achieving the electrical connection between the plurality of battery cells 10.

Each battery cell 10 may be a secondary battery cell or a primary battery cell, or may be a lithium-sulfur battery cell, a sodium-ion battery cell, or a magnesium-ion battery cell, but is not limited thereto. The battery cell 10 may be cylindrical, flat, cuboid, or in other shapes.

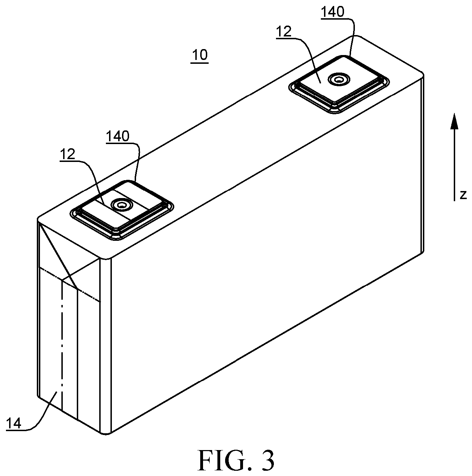

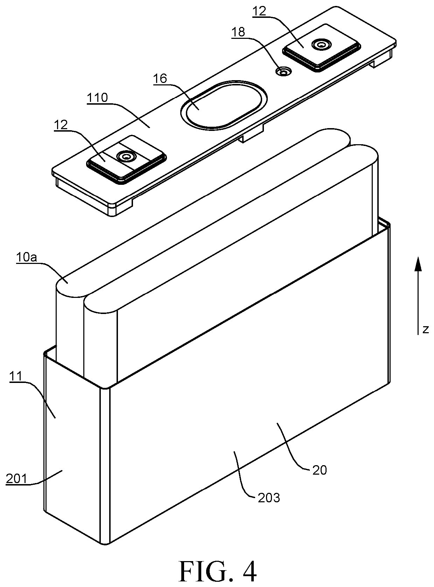

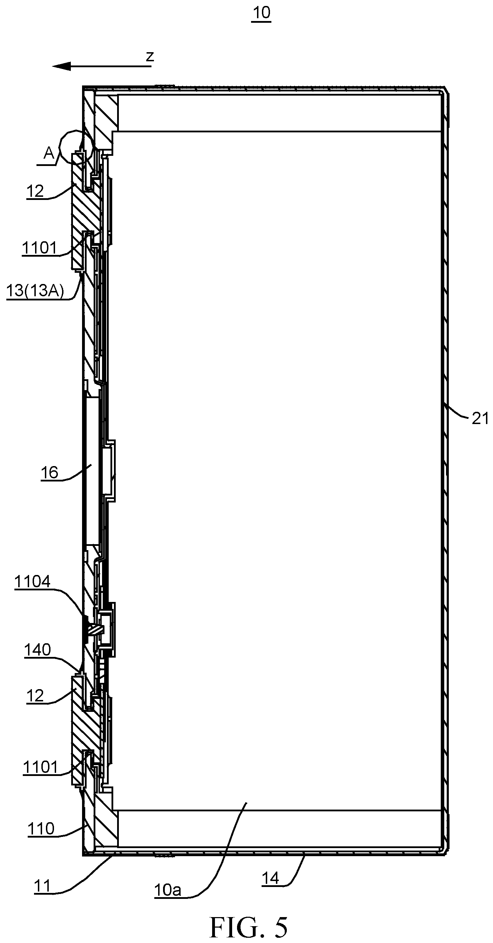

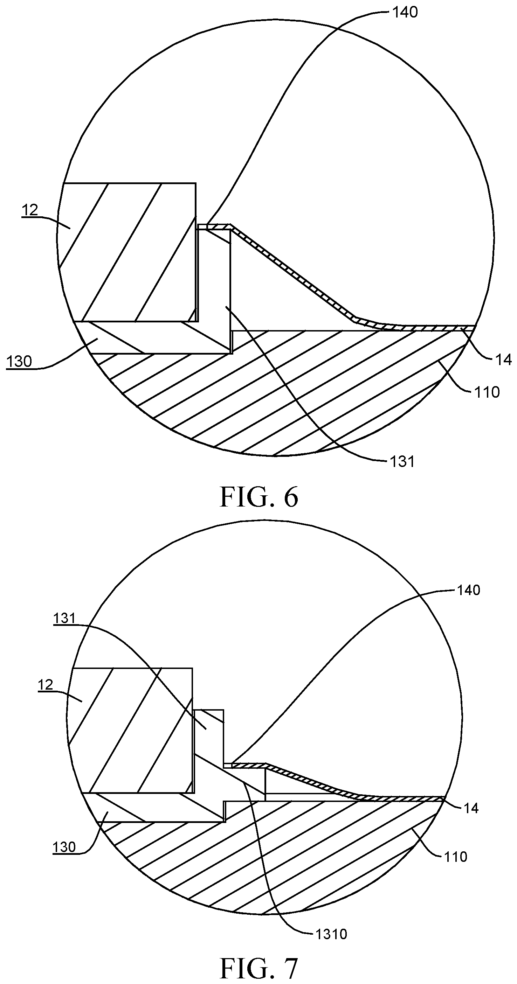

According to some embodiments of this application, a battery cell 10 is provided. Referring to FIG. 3 to FIG. 6, FIG. 3 is a three-dimensional view of a battery cell 10 according to some embodiments of this application, FIG. 4 is a three-dimensional exploded view of a battery cell 10 having an insulating film 14 hidden according to some embodiments of this application, FIG. 5 is an internal schematic diagram of a battery cell 10 according to some embodiments of this application, and FIG. 6 is an enlarged view at a position A in FIG. 5.

The battery cell 10 includes a housing 11, an electrode terminal 12, a first connecting member 13, and an insulating film 14. The housing 11 includes a first end wall 110, the first end wall 110 is provided with a first through-hole 1101, and the first through-hole 1101 passes through the first end wall 110 in a thickness direction z of the first end wall 110. The electrode terminal 12 is mounted in the first through-hole 1101. The first connecting member 13 is at least partially located on an outer side of the first end wall 110 in the thickness direction z, and the first connecting member 13 is disposed in a circumferential direction of the electrode terminal 12 and is connected to the electrode terminal 12. The insulating film 14 covers at least a part of an outer surface of the first end wall 110, the insulating film 14 is provided with a second through-hole 140 for exposing the electrode terminal 12, and the insulating film 14 is connected to the first connecting member 13.

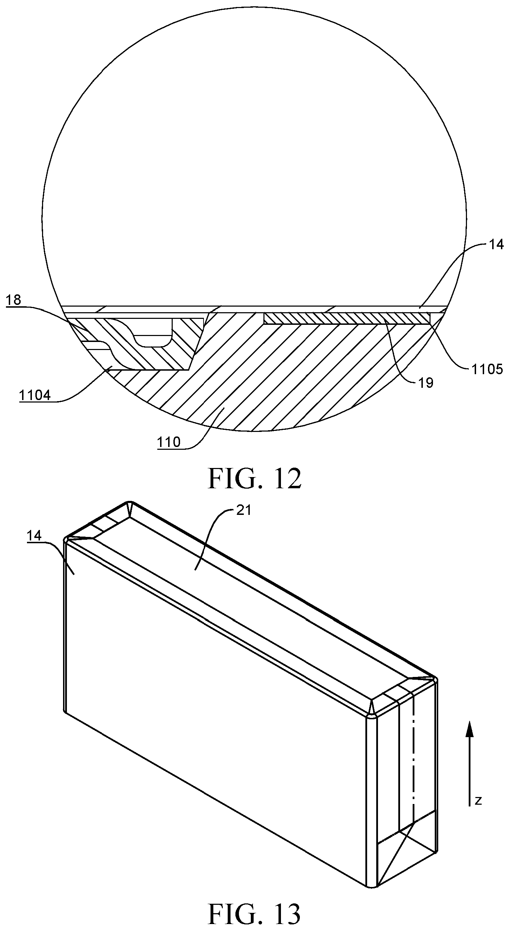

The housing 11 is a component having an accommodating cavity therein to accommodate an electrode assembly 10a and an electrolyte. The first end wall 110 is a wall surface of the housing 11. As shown in FIG. 4, in some embodiments, the housing 11 may include a first end wall 110, a side wall 20, and a second end wall 21 (not shown in FIG. 4 but shown in FIG. 13). The first end wall 110 is disposed opposite to the second end wall 21. The side wall 20 is disposed between the first end wall 110 and the second end wall 21 and is disposed around the first end wall 110 and the second end wall 21. The side wall 20 and the second end wall 21 may form a case. The case has an opening. The first end wall 110 covers the opening to jointly define an accommodating cavity with the case, and isolate the electrode assembly 10a and the electrolyte from the outside. In some embodiments, the first end wall 110 may be referred to as an end cover or a top cover of the battery cell 10. In some other embodiments, the first end wall 110 may alternatively be another part of the housing 11. The first through-hole 1101 is a through-hole structure disposed on the first end wall 110. The first through-hole 1101 extends in the thickness direction z of the first end wall 110 and passes through the first end wall 110, to allow the outside to communicate with the inside of the housing 11.

The electrode terminal 12 is a component mounted in the first through-hole 1101, and the electrode terminal 12 may be electrically connected to the electrode assembly 10a, to input or output electric energy of the battery cell 10. In some embodiments, the electrode terminal 12 may be referred to as a terminal. In some embodiments, referring to FIG. 3 or FIG. 4, two electrode terminals 12 of opposite polarity are mounted on the first end wall 110. For example, the two electrode terminals 12 are respectively a positive electrode terminal and a negative electrode terminal. The two electrode terminals 12 are disposed at an interval.

Currently, a material of the electrode terminal is metal, and the insulating film is made of a thin film material having an insulating property, so that it is not easy to connect the electrode terminal and the insulating film. In some embodiments, the first connecting member 13 is a component that can be connected to the insulating film, and may be made of a material such as rubber or foam. "The first connecting member 13 is at least partially located on an outer side of the first end wall 110 in the thickness direction z" may be understood as that a part of the first connecting member 13 is located on an outer side of the first end portion in the thickness direction z, that is, a part of the first connecting member 13 is located outside the housing 11 and a part of the first connecting member 13 is located inside the housing 11; or all of the first connecting member 13 is located on an outer side of the first end portion in the thickness direction z, that is, all of the first connecting member 13 is located outside the housing 11.

The circumferential direction of the electrode terminal 12 may be a direction surrounding the electrode terminal 12. In some embodiments, an outer contour of the electrode terminal 12 may be considered as a column shape, and the circumferential direction of the electrode terminal 12 may be a ring-shaped direction centering on any point on an axis of the electrode terminal 12. For example, when the cross section of the electrode terminal 12 is circular, the circumferential direction may be in the shape of a circular ring; when the cross section of the electrode terminal 12 is square, the circumferential direction may be in the shape of a square ring. "The first connecting member 13 is disposed in a circumferential direction of the electrode terminal 12" may be understood as that the first connecting member 13 extends in the circumferential direction of the electrode terminal 12. In some embodiments, the first connecting member 13 may be disposed around the electrode terminal 12 at the periphery of the electrode terminal 12. In some other embodiments, the first connecting member 13 may be annularly disposed on the electrode terminal 12. The "connected" of "and connected to the electrode terminal 12" may mean that the first connecting member 13 is at least in contact with the electrode terminal 12, and a connection relationship between the first connecting member and the electrode terminal may be contact, abutting, pressing, embedded, or connected by using another structure. For example, the first connecting member 13 is connected to the electrode terminal 12 by using a riveting member.

The insulating film 14 is a film-shaped member having an insulating property, and can protect and insulate the housing 11. In some embodiments, the insulating film 14 may be referred to as a blue film by a person skilled in the art. "The insulating film 14 covers at least a part of an outer surface of the first end wall 110" may be understood as that the insulating film 14 may cover all of the outer surface of the first end wall 110, or the insulating film 14 may cover a part of the outer surface of the first end wall 110. The second through-hole 140 is a through-hole structure that is disposed on the insulating film 14 and that is used for exposing at least a part of the surface of the electrode terminal 12 to the outside.

In the foregoing solution, the battery cell 10 includes the first connecting member 13 and the insulating film 14, and the first connecting member 13 is disposed in the circumferential direction of the electrode terminal 12. The insulating film 14 is configured to cover at least a part of the outer surface of the first end wall 110 and is provided with the second through-hole 140 for exposing the electrode terminal 12, and the insulating film 14 is connected to the insulating film 14. In an aspect, the insulating film 14 can protect the first end wall 110, to reduce a risk that the first end wall 110 is damaged. In another aspect, the second through-hole 140 is disposed on the insulating film 14, so that the electrode terminal 12 can be exposed, to output and input of electric energy of the battery cell 10. In still another aspect, compared with a solution in which connection stability between an insulating film 14 and an electrode terminal 12 made of a metallic material is poor, the insulating film 14 covers at least a part of the outer surface of the first end wall 110, in collaboration with connecting the insulating film 14 to the first connecting member 13, so that a part on the first end wall 110 on which the electrode terminal 12 is mounted (an interfacial part between the electrode terminal 12 and the first end wall 110 or an interfacial part between the first connecting member 13 and the first end wall 110) can be effectively protected, to reduce a risk that an electrolyte inside the battery cell 10 leaks from the part on the first end wall 110 on which the electrode terminal 12 is mounted, and reduce, a risk that an electrolyte leaking from the part on the first end wall 110 on which the electrode terminal 12 is mounted leaks out of the insulating film 14 and pollutes an object or an environment outside the battery cell 10, thereby improving reliability of the battery.

According to some embodiments of this application, the insulating film 14 is in a hot-melting connection to the first connecting member 13.

In some embodiments, the insulating film 14 and the first connecting member 13 are both made of a non-metallic material, and may be connected to each other through hot-melting. The hot-melting connection may refer to a connection manner in which non-metal and non-metal are heated to a (liquid) melting point and then are connected to each other.

In the foregoing solution, in some embodiments, the first connecting member 13 may be made of a material that is non-metallic and that can perform hot-melting connection. For example, the first connecting member 13 may be a rubber member, and the rubber member and the insulating film 14 can be hot melted to each other. The insulating film 14 and the first connecting member 13 are connected through hot-melting. In an aspect, connection efficiency between the insulating film 14 and the first connecting member 13 can be improved. In another aspect, good connection stability between the insulating film 14 and the first connecting member 13 can be achieved, so that the part on the first end wall 110 on which the electrode terminal 12 is mounted is well protected, thereby improving reliability of the battery.

In some other embodiments, the insulating film 14 and the first connecting member 13 may be connected in another manner, for example, bonded or soldered.

According to some embodiments of this application, a part of the insulating film 14 surrounding the second through-hole 140 is connected to the first connecting member 13.

"A part of the insulating film 14 surrounding the second through-hole 140 is connected to the first connecting member 13" may be understood as that, a part of the insulating film 14 in a circle along an edge of the second through-hole 140 is connected to the first connecting member 13, that is, the insulating film 14 and the first connecting member 13 form sealing around the part on the first end wall 110 on which the electrode terminal 12 is mounted.

In some embodiments, a part of the insulating film 14 surrounding the second through-hole 140 is in a hot-melting connection to the first connecting member 13.

In the foregoing solution, the part of the insulating film 14 connected to the first connecting member 13 is disposed around the second through-hole 140, so that the part on the first end wall 110 on which the electrode terminal 12 is mounted can be effectively well protected, thereby improving reliability of the battery.

According to some embodiments of this application, referring to FIG. 6, the first connecting member 13 is an insulating member 13A. The insulating member 13A includes a base plate 130 and a side plate 131, the base plate 130 is disposed between the electrode terminal 12 and the first end wall 110 in the thickness direction z, the base plate 130 is provided with a third through-hole for the electrode terminal 12 to pass through, the side plate 131 is disposed around the electrode terminal 12, and the side plate 131 is connected to the base plate 130. The insulating film 14 is connected to the side plate 131.

In some embodiments, at least a part of the insulating member 13A is disposed between the electrode terminal 12 and the first end wall 110 in the thickness direction z, that is, in the thickness direction z, a part of the insulating member 13A is disposed between the electrode terminal 12 and the first end wall 110 or all of the insulating member 13A is disposed between the electrode terminal 12 and the first end wall 110. In some embodiments, the first end wall 110 and the electrode terminal 12 may be each made of a metallic material. The insulating member 13A may insulate the electrode terminal 12 and the first end wall 110 from each other, to prevent the first end wall 110 from being short-circuited to the electrode terminal 12. In some embodiments, the insulating member 13A may be referred to as upper rubber by a person skilled in the art.

Referring to FIG. 6, the base plate 130 is in a plate shape. The base plate 130 is located between the electrode terminal 12 and the first end wall 110 in the thickness direction z, to isolate the electrode terminal 12 and the first end wall 110 from each other in the thickness direction z, so that the electrode terminal 12 and the first end wall 110 are insulated from each other in the thickness direction z. The base plate 130 is provided with a third through-hole (not shown in the figure), for the electrode terminal 12 to pass through, so that the electrode terminal 12 can be inserted into the housing 11 and is electrically connected to the electrode assembly 10a. The side plate 131 is a component connected to the base plate 130. In a direction perpendicular to the thickness direction z, the side plate 131 protrudes from the outer peripheral surface of the electrode terminal 12 relative to the base plate 130. In some embodiments, in the thickness direction z, the side plate 131 may be higher than the base plate 130, or may be flush with the base plate 130, or may be lower than the base plate 130. When the side plate 131 is higher than the base plate 130, the side plate 131 is a component disposed around the base plate 130, and may extend in the thickness direction z and be disposed around the outer contour of the electrode terminal 12. In some embodiments, the side plate 131 and the outer contour of the electrode terminal 12 fit each other, thereby improving an insulating effect of the electrode terminal 12 and the first end wall 110.

In some embodiments, the electrode terminal 12 is mounted in the first through-hole 1101 by using the insulating member 13A, and a hole wall of the first through-hole 1101 may be in contact with the insulating member 13A.

In some embodiments, the insulating film 14 may be in a hot-melting connection to the side plate 131, or may be bonded to the side plate 131.

In some embodiments, a part of the insulating film 14 surrounding the second through-hole 140 may be in a hot-melting connection to the side plate 131. Alternatively, in some other embodiments, a part of the insulating film 14 surrounding the second through-hole 140 may be bonded to the side plate 131.

In the foregoing solution, the first connecting member 13 is the insulating member 13A disposed between the electrode terminal 12 and the first end wall 110. In the thickness direction z, the base plate 130 of the insulating member 13A can effectively separate the electrode terminal 12 and the first end wall 110 to insulate the electrode terminal from the first end wall. In the circumferential direction of the electrode terminal 12, the side plate 131 of the insulating member 13A is disposed around the electrode terminal 12, so that the first connecting member 13 can be disposed around the electrode terminal 12, thereby well protecting the part on the first end wall 110 on which the electrode terminal 12 is mounted. Therefore, the first connecting member 13 is an insulating member. In an aspect, connection stability between the insulating member 13A and the insulating film 14 is good, thereby effectively reducing a risk of leakage of the electrolyte. In another aspect, mutual insulation between the electrode terminal 12 and the first end wall 110 can be implemented, thereby reducing a short-circuit risk of the battery cell, and further improving reliability of the battery.

In some embodiments, the electrode terminal 12 is mounted in the first through-hole 1101 by using the insulating member 13A, and the part on the first end wall 110 on which the electrode terminal 12 is mounted may be considered as an interfacial part between the first end wall 110 and the insulating member 13A. The interfacial part is easily damaged by an impact, and the electrolyte is prone to leak from the interfacial part. Therefore, by connecting the part of the insulating film 14 located around the second through-hole 140 to the side plate 131, in collaboration with covering, by the insulating film 14, at least a part of the outer surface of the first end wall 110, the interfacial part between the first end wall 110 and the insulating member 13A can be protected, thereby reducing a risk that the electrolyte inside the battery cell 10 leaks from the interfacial part between the first end wall 110 and the insulating member 13A, and further improving reliability of the battery.

According to some embodiments of this application, with reference to FIG. 5 and FIG. 6, in the thickness direction z, the side plate 131 has a first surface (not numbered in the figure, where the first surface may be considered as an upper surface of the side plate 131 or referred to as a top surface) away from the first end wall 110, and the insulating film 14 is connected to the first surface.

In some embodiments, in the thickness direction z, the side plate 131 may be higher than the base plate 130, and an end portion of a part by which the side plate is higher than the base plate 130 may be the first surface.

In some embodiments, referring to FIG. 6, one end of the side plate 131 away from the first end wall 110 may be considered as a top end of the insulating member 13A. The top end has a flat surface, and the insulating film 14 is connected to the flat surface. In some other embodiments, the first surface may not be a plane, and may be an arc surface or a bumpy surface.

In some embodiments, the part of the insulating film 14 surrounding the second through-hole 140 is connected to the first surface. In some embodiments, the part of the insulating film 14 surrounding the second through-hole 140 is in a hot-melting connection to or is bonded to the first surface.

In the foregoing solution, the first surface is in a direction away from the first end wall 110. In some embodiments, the first surface protrudes relative to the surface of the base plate 130 on a same side in the thickness direction z, that is, the side plate 131 is higher than the base plate 130, and therefore can wrap at least a part of an outer peripheral surface of the electrode terminal 12, to reduce a risk that the electrode terminal 12 is short-circuited to the first end wall 110. In some embodiments, the first surface may be a plane, and the inner surface of the insulating film 14 may be connected to the first surface in a surface contact manner, to provide a larger connection area compared with a case that the end face of the insulating film 14 is connected to the side wall of the side plate 131 in a line contact manner, so that a connection difficulty between the inner surface of the insulating film and the first surface is low, which can improve connection efficiency between the insulating film 14 and the side plate 131, and improve manufacturing efficiency of the battery.

In some embodiments, a surface on which the outer contour of the side plate 131 is located is an outer peripheral surface of the side plate 131, the outer peripheral surface is a curved surface, and a part of the insulating film 14 located around the second through-hole 140 may be connected to the curved surface.

According to some other embodiments of this application, referring to FIG. 7, FIG. 7 is a schematic diagram of an insulating film 14 and an insulating member 13A according to some other embodiments of this application.

A convex portion 1310 is formed on an outer peripheral surface of a side plate 131, and the insulating film 14 is connected to the convex portion 1310.

The convex portion 1310 is a component formed on the outer peripheral surface of the side plate 131. A material of the convex portion 1310 and a material of the side plate 131 may be the same, and may each have an insulating property. Referring to FIG. 7, disposition of the convex portion 1310 increases a dimension of the insulating member 13A in a direction perpendicular to a thickness direction z, that is, a creepage distance between a surface of an electrode terminal 12 and a first end wall 110 also increases.

In some embodiments, a part of the insulating film 14 surrounding a second through-hole 140 may be connected to the convex portion 1310. In some embodiments, a part of the insulating film 14 surrounding a second through-hole 140 may be in a hot-melting connection to or be bonded to the convex portion 1310. "A part of the insulating film 14 surrounding a second through-hole 140 is connected to the convex portion 1310" may mean that, the part of the insulating film 14 located around the second through-hole 140 may be connected to an outer peripheral surface of the convex portion 1310, or as shown in FIG. 7, the part of the insulating film 14 located around the second through-hole 140 may be connected to one end of the convex portion 1310 away from the first end wall 110.

In the foregoing solution, the convex portion 1310 is disposed on the outer peripheral surface of the side plate 131, and the convex portion 1310 is connected to the insulating film 14. In an aspect, compared with the case that the part of the insulating film 14 located around the second through-hole 140 is connected to one end of the side plate 131 away from the base plate 130, a use area of the insulating film 14 can be reduced, thereby reducing costs. In another aspect, because the convex portion 1310 is disposed on the outer peripheral surface of the side plate 131, a creepage distance between the electrode terminal 12 and the first end wall 110 can be increased, thereby improving an effect of a mutual insulating film 14 of the electrode terminal 12 and the first end wall 110, and further improving reliability of the battery.

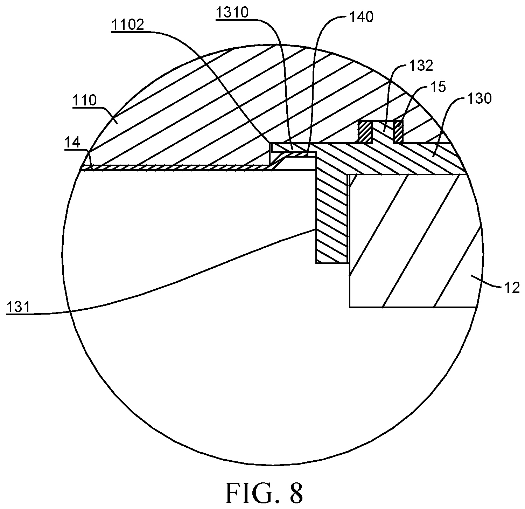

According to still some other embodiments of this application, referring to FIG. 8, FIG. 8 is a schematic diagram of an insulating film 14 and an insulating member 13A according to still some other embodiments of this application. A battery cell 10 shown in FIG. 8 is in an inverted state, which is in an inverted state relative to the structures shown in FIG. 6 and FIG. 7.

With reference to FIG. 5, the first end wall 110 has an outer surface and an inner surface that are disposed opposite to each other in the thickness direction z. The outer surface of the first end wall 110 is provided with a first groove 1102, at least a part of the convex portion 1310 is accommodated in the first groove 1102, and a connecting surface between the insulating film 14 and the convex portion 1310 is located in the first groove 1102.

In the thickness direction z, the inner surface of the first end wall 110 is a part of the first end wall 110 that is located inside the housing 11, and the outer surface of the first end wall 110 is disposed opposite to the inner surface of the first end wall 110. The first groove 1102 is a groove-shaped structure disposed on the outer surface of the first end wall 110. That at least a part of the convex portion 1310 is accommodated in the first groove 1102 may mean that the convex portion 1310 may be entirely accommodated in the first groove 1102, or may be partially accommodated in the first groove 1102, provided that the connecting surface between the insulating film 14 and the convex portion 1310 is located in the first groove 1102.

Referring to FIG. 8, when the battery cell 10 is inverted, the first end wall 110 may be considered as a component of the housing 11 that is closest to the ground. A plane on which a groove bottom of the first groove 1102 is located is farther away from the ground than the outer surface of the first end wall 110. In this case, the convex portion 1310 accommodated in the first groove 1102 is farther away from the ground than the outer surface of the first end wall 110, and the connecting surface between the convex portion 1310 and the insulating film 14 is farther away from the ground than the outer surface of the first end wall 110.

In the foregoing solution, when the battery cell 10 is inverted and used, that is, when the first end wall 110 is a part of the housing 11 closest to the ground during use, the first groove 1102 is disposed on the outer surface of the first end wall 110 and at least a part of the convex portion 1310 is accommodated in the first groove 1102, so that a part of the insulating film 14 connected to the convex portion 1310 is not a lowest part of the battery cell 10, thereby reducing a risk that the electrolyte leaking from the part on the first end wall 110 on which the electrode terminal 12 is mounted, or the electrolyte leaking from another part infiltrates into the part of the insulating film 14 connected to the convex portion 1310, further improving connection stability of the part of the insulating film 14 connected to the convex portion 1310, and reducing a risk that the electrolyte leaks or leaks outward. Therefore, the battery has high reliability.

According to still some other embodiments of this application, referring to FIG. 8, the battery cell 10 further includes a sealing member 15, and the sealing member 15 is disposed between the first end wall 110 and the insulating member 13A.

The sealing member 15 is a component that can form sealing between the first end wall 110 and the insulating member 13A. In some embodiments, the sealing member 15 may be a bonding structure disposed between the first end wall 110 and the insulating member 13A. A function of the sealing member 15 may be to hinder the electrolyte from flowing between the first end wall 110 and the insulating member 13A.

In some embodiments, the sealing member 15 may be a component disposed between the base plate 130 of the insulating member 13A and the first end wall 110.

In the foregoing solution, the sealing member 15 is disposed between the first end wall 110 and the insulating member 13A, so that a risk that the electrolyte flows between the first end wall 110 and the insulating member 13A and acts on the electrode terminal 12 can be reduced, thereby reducing a risk that the electrode terminal 12 and the first end wall 110 are short-circuited, and improving reliability of the battery.

According to still some other embodiments of this application, referring to FIG. 8, the insulating member 13A includes a bump 132, the first end wall 110 is provided with a sealing groove, the bump 132 is inserted in the sealing groove, and the sealing member 15 fills a void between the bump 132 and the sealing groove.

Referring to FIG. 8, in the thickness direction z, a groove-shaped structure is formed on a surface of the first end wall 110 that faces the insulating member 13A, and the operation structure is a sealing groove. In the thickness direction z, the insulating member 13A has a bump 132 protruding toward the sealing groove. The bump 132 is inserted into the sealing groove, so that a bumpy surface is formed between the first end wall 110 and the insulating member 13A. Disposition of the bumpy surface can prolong a path in which the electrolyte flows between the first end wall 110 and the insulating member 13A, thereby reducing difficulty in flowing, by the electrolyte, through the first end wall 110 and the insulating member 13A. "The sealing member 15 fills a void between the bump 132 and the sealing groove" may mean that there is a void between the bump 132 and the sealing groove, and the sealing member 15 fills the void. In some embodiments, the sealing member 15 may be an adhesive (for example, glue), and the adhesive may be solidified after filling the void in a fluid state.

In the foregoing solution, the bump 132 is disposed and the sealing member 15 fills between the bump 132 and the sealing groove, so that a risk that the electrolyte flows between the first end wall 110 and the insulating member 13A and acts on the electrode terminal 12 can be further reduced, thereby reducing a risk that the electrode terminal 12 is short-circuited to the first end wall 110, and improving reliability of the battery.

According to some embodiments of this application, the bump 132 and the sealing groove are both annular and are disposed in the circumferential direction of the electrode terminal 12.

In some embodiments, the bump 132 and the sealing groove are disposed corresponding to each other, and are both ring-shaped to be capable of being disposed in the circumferential direction of the electrode terminal 12, that is, around the electrode terminal 12, to surround the electrode terminal 12.

In the foregoing solution, the bump 132 and the sealing groove are both annular and are disposed in the circumferential direction of the electrode terminal 12, so that the electrode terminal 12 can be protected well in the circumferential direction of the electrode terminal 12, and a risk that the electrolyte flows between the first end wall 110 and the insulating member 13A and acts on the electrode terminal 12 can be effectively reduced. Therefore, the battery has high reliability.

In some other embodiments, a plurality of bumps 132 and sealing grooves that are disposed at intervals may be disposed between the insulating member 13A and the first end wall 110 in an axial direction perpendicular to the electrode terminal 12, and the sealing member 15 fills voids between the bumps 132 and the sealing grooves. By disposing the plurality of bumps 132 and sealing grooves, a flow path of the electrolyte can be prolonged, thereby reducing a risk of leakage of the electrolyte.

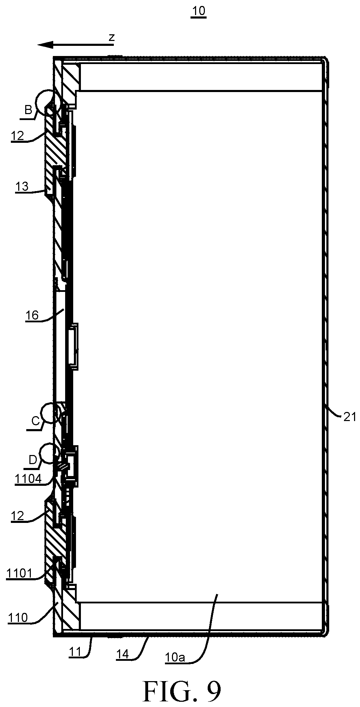

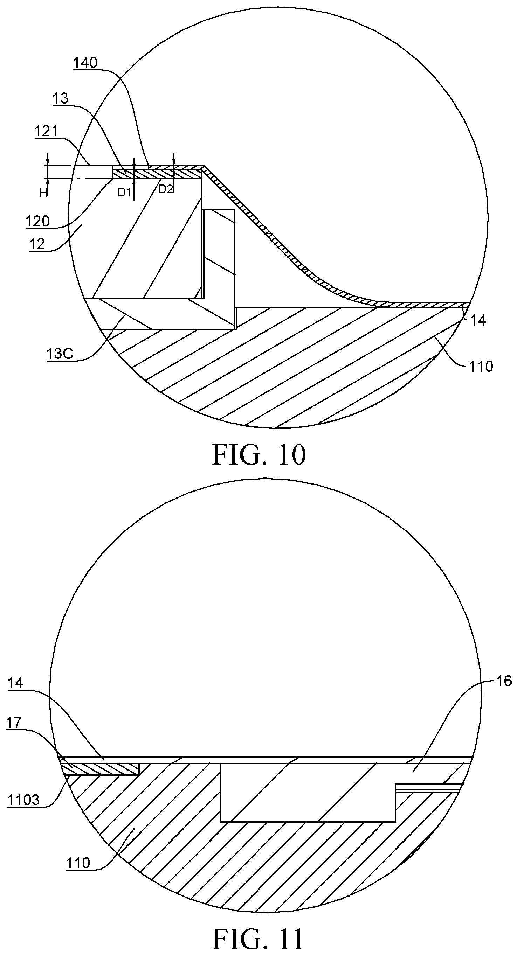

According to some other embodiments of this application, referring to FIG. 9 and FIG. 10, FIG. 9 is an internal schematic diagram of a battery cell 10 according to yet some other embodiments of this application, and FIG. 10 is an enlarged view at a position B in FIG. 9. An electrode terminal 12 includes a first end face 121 facing away from a first end wall 110 in a thickness direction z and an outer peripheral surface disposed around the first end face. A first connecting member 13 is disposed on the first end face 121 and/or the outer peripheral surface of the electrode terminal 12.

A surface of the electrode terminal 12 is provided with a second groove 120, the second groove 120 extends in the circumferential direction of the electrode terminal 12, and the first connecting member 13 is disposed in the second groove 120.

In some embodiments, the first connecting member 13 may be made of a material that can implement hot-melting connection (for example, the first connecting member 13 may be made of a material such as plastic or rubber), to be connected to an insulating film 14 in a hot-melting manner. In some other embodiments, the first connecting member 13 may alternatively be connected to the insulating film 14 in a manner such as bonding.

That the first connecting member 13 is disposed on the first end face 121 and/or the outer peripheral surface of the electrode terminal 12 may mean that the first connecting member 13 may be disposed on a surface of the electrode terminal 12. The surface of the electrode terminal 12 may refer to a surface of the electrode terminal 12 exposed to the outside.

In some embodiments, the first connecting member 13 may be disposed on the surface of the electrode terminal 12 through bonding, or may be disposed on the surface of the electrode terminal 12 by using another connection structure. For example, the first connecting member 13 may be disposed on the surface of the electrode terminal 12 by using a structure such as a rivet or a pin.

In the foregoing solution, the first connecting member 13 is disposed on the first end face 121 and/or the outer peripheral surface of the electrode terminal 12, and the insulating film 14 is connected to the first connecting member 13, in collaboration with covering, by the insulating film 14, at least a part of the outer surface of the first end wall 110, so that an interfacial part between the electrode terminal 12 and the first end wall 110 can be protected, thereby reducing a risk that the electrolyte inside the battery cell 10 leaks and leaks out of the insulating film 14, and further improving reliability of the battery.

It should be noted that, in some embodiments, as shown in FIG. 10, the electrode terminal 12 and the first end wall 110 may have an insulating structure 13C disposed therebetween and are insulated from each other. The insulating structure 13C is marked in FIG. 10.

According to some embodiments of this application, a surface of the electrode terminal 12 is provided with a second groove 120, the second groove 120 extends in the circumferential direction of the electrode terminal 12, and the first connecting member 13 is disposed in the second groove 120.

The second groove 120 is a groove-shaped structure that is disposed on the surface of the electrode terminal 12 and that extends in the circumferential direction of the electrode terminal 12. That the second groove 120 extends in the circumferential direction of the electrode terminal 12 may mean that the second groove 120 is in an annular shape. In some embodiments, the second groove 120 may be in the shape of a circular ring or in another head-to-tail shape, for example, an annular square or triangle. The shape of the first connecting member 13 may correspond to that of the second groove 120, to make it convenient for the first connecting member 13 to be disposed in the second groove.

That the first connecting member 13 is disposed in the second groove 120 may mean that the first connecting member 13 is located in the second groove 120 and is connected to the electrode terminal 12. In some embodiments, the first connecting member 13 may be embedded in the second groove 120, or may be snap-fit into the second groove 120. In some other embodiments, the first connecting member 13 may be embedded in the second groove 120 and connected to the electrode terminal 12 through bonding.

In the foregoing solution, the second groove 120 is disposed on the surface of the electrode terminal 12, and the first connecting member 13 is disposed in the second groove 120, so that connection stability between the first connecting member 13 and the electrode terminal 12 can be improved, and a risk that the first connecting member 13 is detached from the electrode terminal 12 can be reduced. Therefore, the insulating film 14 effectively protects the interfacial part between the electrode terminal 12 and the first end wall 110, thereby reducing a risk that the electrolyte inside the battery cell 10 leaks and leaks out of the insulating film 14, and further improving reliability of the battery. According to some embodiments of this application, the second groove 120 is disposed on the first end face 121.

In some embodiments, the first end face 121 may be a part of the electrode terminal 12 that is electrically connected to an external component, and the first end face 121 may be considered as a top surface of the electrode terminal 12.

In some embodiments, the second groove 120 may be formed on the first end face 121 by turning or stamping.

In the foregoing solution, the first end face 121 may be a top surface of the electrode terminal 12, and the second groove 120 is disposed on the top surface of the electrode terminal 12, which can reduce difficulty in disposing the second groove 120, improve manufacturing efficiency of the electrode terminal 12, and further improve manufacturing efficiency of the battery compared with the case that the second groove 120 is disposed on the peripheral surface of the electrode terminal 12.

In some embodiments, referring to FIG. 10, an area of a part of the insulating film 14 that is connected to the first connecting member may be smaller than a surface area of the first connecting member. That is, the insulating film 14 covers a part of an outer surface of the first connecting member, and there is a blank region that is not covered by the insulating film 14 on the outer surface of the first connecting member. In some other embodiments, an area of a part of the insulating film 14 that is connected to the first connecting member may be equal to a surface area of the first connecting member. That is, the insulating film 14 covers an outer surface of the first connecting member.

According to some embodiments of this application, referring to FIG. 10, the second groove 120 extends to the outer peripheral surface of the electrode terminal 12.

The outer peripheral surface of the electrode terminal 12 is a part disposed around the first end face 121. When the electrode terminal 12 is cylindrical, the first end face 121 is a top surface of the electrode terminal 12, and the outer peripheral surface may be an arc-shaped outer surface of the electrode terminal 12. When the electrode terminal 12 is cuboid, the first end face 121 is a top surface of the electrode terminal 12, and the outer peripheral surface may be an outer side surface of the electrode terminal 12.

"The second groove 120 extends to the outer peripheral surface of the electrode terminal 12" may be understood as that forming of the second groove 120 cancels out a part of the outer peripheral surface of the electrode terminal 12. In some embodiments, a process of forming the second groove 120 may be performing turning in a direction from the outer peripheral surface of the electrode terminal 12 toward a center of the electrode terminal 12 to form the second groove 120, or performing stamping to allow a stamped region to cover an outer contour line of the electrode terminal 12. Alternatively, in some embodiments, the electrode terminal 12 may be integrally formed, and the second groove 120 of the electrode terminal is also formed in the process of integrally forming the electrode terminal 12.

In the foregoing solution, the second groove 120 extends to the outer peripheral surface of the electrode terminal 12, so that a risk that the insulating film 14 protrudes relative to the first end face 121 can be reduced, and an entire volume of the battery cell 10 can be prevented from increasing. Therefore, the battery cell 10 has a high volume energy density.

According to some embodiments of this application, the insulating film 14 does not exceed the first end face 121 in the thickness direction z.

In some embodiments, that a groove bottom surface of the second groove 120 is a flat surface may be understood as that all parts of the groove bottom surface of the second groove 120 are in a same plane in the thickness direction z. Referring to FIG. 10, a depth of the second groove 120 is H, a thickness of the first connecting member 13 is D1, and a thickness of the insulating film 14 is D2, which satisfies D1+D2 ≤ H. The depth H of the second groove 120 may refer to a dimension of the second groove 120 in the thickness direction z, that is, a distance from a groove opening to a groove bottom of the second groove 120. The thickness D1 of the first connecting member 13 may refer to a dimension of the first connecting member 13 in the thickness direction z. In FIG. 10, the thickness D2 of the insulating film 14 may refer to a dimension of the insulating film 14 in the thickness direction z. "D1+D2 ≤ H" may be understood that when the insulating film 14 is connected to the first connecting member 13, the insulating film 14 does not exceed the groove opening of the second groove 120 in the thickness direction z, or the insulating film 14 does not exceed the outer surface of the first end face 121 in the thickness direction z.

In the foregoing solution, the insulating film 14 is limited to being not higher than the first end face 121, thereby facilitating connection between the first end face 121 and an external component, and facilitating input and output of electric energy. In some embodiments, a sum of a thickness of the first connecting member 13 and a thickness of the insulating film 14 is less than a depth of the second groove 120, so that the insulating film 14 can be prevented from protruding out of the first end face 121, connection between the first end face 121 and an external component is facilitated, and electric energy is normally inputted/outputted.

According to some other embodiments of this application, the second groove 120 is disposed on the outer peripheral surface of the electrode terminal 12.

In some embodiments, the second groove 120 is annularly disposed on the outer peripheral surface of the electrode terminal 12. In the thickness direction z, there may be a particular distance between the second groove 120 and the first end face 121, so that there is a particular distance between the first connecting member 13 disposed in the second groove 120 and the first end face 121.

In some embodiments, the second groove 120 may be in the shape of a circular ring or in another head-to-tail shape, for example, an annular square or triangle. The shape of the first connecting member 13 may correspond to that of the second groove 120, to make it convenient for the first connecting member 13 to be disposed in the second groove.

In the foregoing solution, the second groove 120 is disposed on the outer peripheral surface of the electrode terminal 12 and surrounds the electrode terminal 12, and the first connecting member 13 is disposed in the second groove 120. In an aspect, the electrode terminal can be connected to the insulating film 14 and connection stability is good, so that the insulating film 14 effectively protects the interfacial part between the electrode terminal 12 and the first end wall 110, thereby reducing a risk that the electrolyte inside the battery cell 10 leaks and leaks out of the insulating film 14, and further improving reliability of the battery. In another aspect, the first end face 121 of the electrode terminal 12 can be exposed, to make it convenient for the first end face 121 to be connected to an external component, thereby facilitating normal input and output of electric energy.

According to some embodiments of this application, with reference to FIG. 11, FIG. 11 is an enlarged view at a position C in FIG. 9. The battery cell 10 further includes a pressure-relief portion 16 and a second connecting member 17. The pressure-relief portion 16 is disposed on a wall portion of the housing 11, and the insulating film 14 covers the pressure-relief portion 16. The second connecting member 17 is disposed on the wall portion of the housing 11 and is disposed around the pressure-relief portion 16. The second connecting member 17 is connected to the insulating film 14.

The pressure-relief portion 16 is a component disposed on the wall portion of the housing 11, and can release an internal pressure of the battery cell 10, so that the battery cell 10 has high reliability. In some embodiments, the pressure-relief portion 16 may be a structure disposed on the first end wall 110, such as a pressure-relief valve or a nick. The wall portion of the housing 11 may refer to the first end wall 110, or may refer to a part of the housing 11 that is not the first end wall 110, for example, an outer peripheral wall of the housing 11.

In some embodiments, the first end wall 110 is made of a metallic material, and is not easily connected to the insulating film 14. The second connecting member 17 is made of a material that is easily connected to the insulating film 14, which may be a non-metallic material. In some embodiments, the second connecting member 17 may be made of a material that can implement hot-melting connection (for example, the second connecting member 17 may be made of a material such as plastic or rubber), to be connected to an insulating film 14 in a hot-melting manner. In some other embodiments, the second connecting member 17 may alternatively be connected to the insulating film 14 in a manner such as bonding. The second connecting member 17 is annular and can surround the pressure-relief portion 16 for at least one circle.

In the foregoing solution, the second connecting member 17 is disposed around the pressure-relief portion 16, and the insulating film 14 and the second connecting member 17 are connected to each other, so that a risk that the electrolyte leaking between the pressure-relief portion 16 and the first end wall 110 leaks out of the insulating film 14 can be reduced. Therefore, the battery has high reliability.

According to some embodiments of this application, the wall portion of the housing 11 is provided with a third groove 1103, the third groove 1103 is disposed around the pressure-relief portion 16, and the second connecting member 17 is disposed in the third groove 1103 and is in a hot-melting connection to the insulating film 14.

The third groove 1103 is a groove-shaped structure that is formed on an outer surface of the wall portion of the housing 11 and that is disposed around the pressure-relief portion 16. The third groove 1103 can accommodate the second connecting member 17. The second connecting member 17 may be disposed in the third groove 1103 through snap-fit, bonding, or the like. In some embodiments, the third groove 1103 may be in the shape of a circular ring or in another head-to-tail shape, for example, an annular square or triangle. The shape of the second connecting member 17 may correspond to that of the third groove 1103, to make it convenient for the second connecting member 17 to be disposed in the third groove 1103.

In the foregoing solution, the third groove 1103 surrounding the pressure-relief portion 16 is disposed on the outer surface of the wall portion of the housing 11, and the second connecting member 17 is disposed in the third groove 1103, so that the connection stability between the second connecting member 17 and the housing 11 can be improved. In addition, hot-melting is performed between the insulating film 14 and the second connecting member 17, so that the connection stability between the second connecting member 17 and the insulating film 14 can be improved, and a risk that the electrolyte leaking between the pressure-relief portion 16 and the wall portion of the housing 11 leaks out of the insulating film 14 can be effectively reduced. Therefore, the battery has high reliability.

According to some embodiments of this application, the pressure-relief portion 16 is disposed on the first end wall 110.

In some embodiments, the pressure-relief portion 16 is disposed on the first end wall 110, and the second connecting member 17 may also be disposed on the first end wall 110.

In the foregoing solution, the electrode terminal 12 and the pressure-relief portion 16 are both disposed on the first end wall 110. In an aspect, when the first end wall 110 is an independently manufactured component, because the electrode terminal 12 and the pressure-relief portion 16 are both disposed on the first end wall 110, the electrode terminal and the pressure-relief portion may be simultaneously manufactured or assembled, thereby improving manufacturing efficiency of the battery cell 10, and further improving manufacturing efficiency of the battery. In another aspect, because the electrode terminal 12 and the pressure-relief portion 16 are both disposed on the first end wall 110, connection of the insulating film 14 to the first connecting member 13 and the second connecting member 17 can be facilitated, thereby improving assembly efficiency of the insulating film 14.

It should be noted that, in some of the foregoing embodiments, the enlarged view at the position C in FIG. 9 is used as an example to describe structures such as the pressure-relief portion 16, the third groove 1103, and the second connecting member 17, but the foregoing solution is not limited to being only applicable to the solution in which the first connecting member 13 is disposed on the surface of the electrode terminal 12 shown in FIG. 9. For example, the foregoing solution may be further applicable to the solution in which the first connecting member 13 is the insulating member 13A.

According to some embodiments of this application, with reference to FIG. 12, FIG. 12 is an enlarged view at a position D in FIG. 9. The wall portion of the housing 11 is provided with a liquid injection hole 1104 and a plugging member 18, the plugging member 18 plugs the liquid injection hole 1104, and the insulating film 14 covers the plugging member 18. The battery cell 10 further includes a third connecting member 19, the third connecting member 19 is disposed on the wall portion of the housing 11 and is disposed around the liquid injection hole 1104, and the third connecting member 19 is connected to the insulating film 14.

The liquid injection hole 1104 is a hole structure disposed on the first end wall 110, and an electrolyte may be injected into the housing 11 through the liquid injection hole 1104. The plugging member 18 is a component configured to plug the liquid injection hole 1104, and may be a structure capable of plugging the liquid injection hole 1104, such as a plugging nail or a plugging screw. The wall portion of the housing 11 may refer to the first end wall 110, or may refer to a part of the housing 11 that is not the first end wall 110, for example, an outer peripheral wall of the housing 11.

In some embodiments, the first end wall 110 is made of a metallic material, and is not easily connected to the insulating film 14. The third connecting member 19 is made of a material that is easily connected to the insulating film 14, which may be a non-metallic material. In some embodiments, the third connecting member 19 may be made of a material that can implement hot-melting connection (for example, the third connecting member 19 may be made of a material such as plastic or rubber), to be connected to an insulating film 14 in a hot-melting manner. In some other embodiments, the third connecting member 19 may alternatively be connected to the insulating film 14 in a manner such as bonding.

In the foregoing solution, the third connecting member 19 is disposed around the liquid injection hole 1104, and the insulating film 14 and the third connecting member 19 are connected to each other, so that a risk that the electrolyte leaking from the liquid injection hole 1104 or between the plugging member 18 and the first end wall 110 leaks out of the insulating film 14 can be reduced. Therefore, the battery has high reliability.

According to some embodiments of this application, the wall portion of the housing 11 is provided with a fourth groove 1105, the fourth groove 1105 is disposed around the liquid injection hole 1104, and the third connecting member 19 is disposed in the fourth groove 1105 and is in a hot-melting connection to the insulating film 14.

The fourth groove 1105 is a groove-shaped structure that is formed on a surface of the wall portion of the housing 11 and that is disposed around the liquid injection hole 1104. The fourth groove 1105 can accommodate the third connecting member 19. The third connecting member 19 may be disposed in the fourth groove 1105 through snap-fit, bonding, or the like. In some embodiments, the fourth groove 1105 may be in the shape of a circular ring or in another head-to-tail shape, for example, an annular square or triangle. The shape of the third connecting member 19 may correspond to that of the fourth groove 1105, to make it convenient for the third connecting member 19 to be disposed in the fourth groove 1105.

In the foregoing solution, the fourth groove 1105 surrounding the liquid injection hole 1104 is disposed on the wall portion of the housing 11, and the third connecting member 19 is disposed in the fourth groove 1105, so that the connection stability between the third connecting member 19 and the housing 11 can be improved. In addition, hot-melting connection is performed between the insulating film 14 and the third connecting member 19, so that the connection stability between the third connecting member 19 and the insulating film 14 can be improved, and a risk that the electrolyte leaking from the liquid injection hole 1104 or between the plugging member 18 and the wall portion of the housing 11 leaks out of the insulating film 14 can be effectively reduced. Therefore, the battery has high reliability.

According to some embodiments of this application, the liquid injection hole 1104 is disposed on the first end wall 110.

The liquid injection hole 1104 is disposed on the first end wall 110, that is, the third connecting member 19 may also be disposed on the first end wall 110.

In the foregoing solution, the electrode terminal 12 and the liquid injection hole 1104 are both disposed on the first end wall 110. In an aspect, when the first end wall 110 is an independently manufactured component, because the electrode terminal 12 and the liquid injection hole 1104 are both disposed on the first end wall 110, the electrode terminal and the pressure-relief portion may be simultaneously assembled or manufactured, thereby improving manufacturing efficiency of the battery cell 10, and further improving manufacturing efficiency of the battery. In another aspect, connection of the insulating film 14 to the first connecting member 13 and the third connecting member 19 can be facilitated, thereby improving assembly efficiency of the insulating film 14.

It should be noted that, in some of the foregoing embodiments, the enlarged view at the position D in FIG. 9 is used as an example to describe structures such as the liquid injection hole 1104, the plugging member 18, the fourth groove 1105, and the third connecting member 19, but the foregoing solution is not limited to being only applicable to the solution in which the first connecting member 13 is disposed on the surface of the electrode terminal 12 shown in FIG. 9. For example, the foregoing solution may be further applicable to the solution in which the first connecting member 13 is the insulating member 13A.

In some embodiments, a part between the pressure-relief portion 16 and the first end wall 110 and a part between the plugging member 18 and the first end wall 110 may be considered as parts, of the battery cell 10, from which the electrolyte is prone to leak. Therefore, for another part, of the battery cell 10, from which the electrolyte is prone to leak, reference may also be made to the foregoing solution for improvement. For example, in some embodiments, the housing 11 of the battery cell 10 includes a top cover and a case. The top cover is soldered to the case. When a weld between the top cover and the case is damaged by an impact, the electrolyte is prone to leak. A structure having an insulating property may be disposed around the weld, and the structure may be connected to the insulating film 14, for example, in a hot-melting connection, to protect the weld and reduce a risk of leakage of the electrolyte.

According to some embodiments of this application, with reference to FIG. 4, the housing 11 further includes a side wall 20, and the side wall 20 is disposed around the first end wall 110. The insulating film 14 covers the outer surface of the first end wall 110 and covers at least a part of an outer surface of the side wall 20. The housing further includes a second end wall 21. The first end wall 110 is disposed opposite to the second end wall 21. The side wall 20 is disposed between the first end wall 110 and the second end wall 21 and is disposed around the first end wall 110 and the second end wall 21.

In some embodiments, the side wall 20 may be a peripheral wall of the housing 11. When the first end wall 110 is a part of the housing 11 in the thickness direction z, the side wall 20 may be a part of the housing 11 in a direction perpendicular to the thickness direction z.

The insulating film 14 covers the outer surface of the first end wall 110 and covers at least a part of the outer surface of the side wall 20. That is, all of the surface of the first end wall 110 exposed to the outside is covered by the insulating film 14, and the insulating film 14 further covers a part or all of the outer surface of the side wall 20.

In the foregoing solution, when the battery cell 10 is inverted and used, that is, when the first end wall 110 is the wall of the housing 11 closest to the ground, the insulating film 14 covers the outer surface of the first end wall 110 and covers at least a part of the outer surface of the side wall 20, and an electrolyte leaking from the housing 11, between the housing 11 and the electrode terminal 12, or between the housing 11 and another component (for example, the plugging member 18 or the pressure-relief portion 16) can be held, thereby preventing the electrolyte from leaking outward. Therefore, the battery has high reliability.

According to some embodiments of this application, referring to FIG. 13, FIG. 13 is a schematic diagram of an insulating film 14 and a housing 11 according to some embodiments of this application. The housing 11 further includes a second end wall 21, the second end wall 21 is disposed opposite to the first end wall 110, and the side wall 20 connects the first end wall 110 and the second end wall 21. The insulating film 14 covers at least a part of an outer surface of the second end wall 21.

The first end wall 110 may be disposed opposite to the second end wall 21 in the thickness direction z. In some embodiments, the first end wall 110 may be a top wall of the housing 11, and the second end wall 21 may be a bottom wall of the housing 11. The side wall 20 is a component disposed between the first end wall 110 and the second end wall 21, and is disposed around the first end wall 110 and the second end wall 21, to jointly form, with the first end wall 110 and the second end wall 21, a closed cavity for accommodating the electrode assembly 10a and the electrolyte.

"The insulating film 14 covers at least a part of an outer surface of the second end wall 21" may mean that, after covering the first end wall 110, the insulating film 14 not only extends to the side wall 20, but also extends to the second end wall 21, which may indicate that there is a large coverage area between the insulating film 14 and the housing 11, so that there is high connection stability between the insulating film 14 and the housing 11, making it uneasy for the insulating film 14 to fall off from the housing 11.

In the foregoing solution, the insulating film 14 covers at least a part of the outer surface of the second end wall 21, so that the insulating film 14 is stably attached to the outer surface of the housing 11, thereby reducing a risk that the insulating film 14 falls off from the housing 11. Therefore, the battery has high reliability.

According to some embodiments of this application, referring to FIG. 13, a part of the outer surface of the second end wall 21 is not covered by the insulating film 14.

In some embodiments, a material of the housing 11 may be a metallic material. For example, the housing 11 is made of metal such as aluminum, aluminum alloy, or copper. A material of the second end wall 21 may also be a metallic material. A part of the outer surface of the second end wall 21 is not covered by the insulating film 14, that is, a part of the metallic material on the surface is exposed to the outside.

In the foregoing solution, a part of the outer surface of the second end wall 21 is configured to be not covered by the insulating film 14, to make it convenient for the part not covered by the insulating film 14 to be connected to an external connection structure. For example, when the battery cell 10 is inverted and used, the part not covered by the insulating film 14 can be effectively bonded to a wall surface of a box 30 or a chassis of a vehicle.

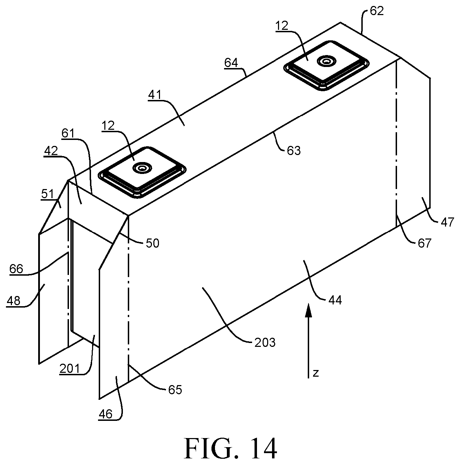

In some embodiments, the insulating film 14 may be disposed on the outer surface of the housing 11 through folding. Referring to FIG. 14 and with reference to FIG. 3, FIG. 14 is a schematic diagram of a process in which an insulating film 14 is folded over a housing 11 according to some embodiments of this application. The housing 11 is a cuboid housing 11, and the side wall 20 includes a first side wall 201 and a second side wall that are disposed opposite to each other, and a third side wall 203 and a fourth side wall that are disposed opposite to each other. An area of the third side wall 203 is greater than an area of the first side wall 201. In FIG. 14, because the second side wall and the fourth side wall are blocked, the second side wall and the fourth side wall are not numbered.

The insulating film 14 may include at least a first part 41, a second part 42, a third part, a fourth part 44, a fifth part, a sixth part 46, a seventh part 47, an eighth part 48, a ninth part, a tenth part 50, an eleventh part 51, a twelfth part, and a thirteenth part. The first part 41 is disposed corresponding to the first end wall 110, and the first part 41 forms the second through-hole 140. The second end portion is disposed corresponding to the first side wall 201, the third part is disposed corresponding to the second side wall (because the third part is blocked, the third part is not numbered), the fourth part 44 is disposed corresponding to the third side wall 203, the fifth part is disposed corresponding to the fourth side wall (because the fifth part is blocked, the fifth part is not numbered), the sixth part 46 is disposed corresponding to the first side wall 201, the seventh part 47 is disposed corresponding to the second side wall, the eighth part 48 is disposed corresponding to the first side wall 201, the ninth part is disposed corresponding to the second side wall (because the ninth part is blocked, the ninth part is not numbered), both the tenth part 50 and the eleventh part 51 are disposed corresponding to the first side wall 201, and the twelfth part and the thirteenth part are disposed corresponding to the second side wall (because the twelfth part and the thirteenth part are blocked, the twelfth part and the thirteenth part are not numbered).

A method for folding the insulating film 14 may be as follows: The first part 41 is disposed on the first end wall 110. There is a first broken line 61 between the first part 41 and the second part 42. The second part 42 is folded toward the first side wall 201 along the first broken line 61 and fits the first side wall 201. In some embodiments, the second part 42 may be bonded to the first side wall 201. There is a second broken line 62 between the first part 41 and the third part. The third part is folded toward the second side wall along the second broken line 62 and fits the second side wall. In some embodiments, the third part may be bonded to the second side wall. There is a third broken line 63 between the first part 41 and the fourth part 44. The fourth part 44 is folded toward the third side wall 203 along the third broken line 63 and fits the third side wall 203. In some embodiments, the fourth part 44 may be bonded to the third side wall 203. There is a fourth broken line 64 between the first part 41 and the fifth part, and the fifth part is folded toward the fourth side wall along the fourth broken line 64 and fits the fourth side wall. In some embodiments, the fifth part may be bonded to the fourth side wall.

The eleventh part 51 is a part between the eighth part 48 and the second part 42, there is a broken line between the eleventh part 51 and the eighth part 48, and there is also a broken line between the eleventh part 51 and the second part 42. The tenth part 50 is folded between the second part 42 and the eighth part 48. Similarly, the tenth part 50 is a part between the sixth part 46 and the second part 42, and the tenth part 50 is also disposed between the sixth part 46 and the second part 42 through folding. Similarly, the twelfth part and the thirteenth part are also folded according to the foregoing method, the twelfth part may be located between the seventh part 47 and the third part, and the thirteenth part may be located between the ninth part and the third part.

There is a fifth broken line 65 between the sixth part 46 and the fourth part 44. The sixth part 46 is folded toward the first side wall 201 together with the tenth part 50 along the fifth broken line 65 and fits the second part 42 and a part of the first side wall 201. In some embodiments, the sixth part 46 and the tenth part 50 may be bonded to the second part 42 and a part of the first side wall 201. There is a sixth broken line 66 between the eighth part 48 and the fifth part. The eighth part 48 is folded toward the first side wall 201 together with the eleventh part 51 along the sixth broken line 66 and fits the second part 42 and the sixth part 46. In some embodiments, the eighth part 48 and the eleventh part 51 may be bonded to the second part 42 and the sixth part 46. Similarly, there is a seventh broken line 67 between the seventh part 47 and the fourth part 44, and there is an eighth broken line (which is blocked in the figure and therefore is not numbered) between the ninth part and the fifth part. The seventh part 47 and the ninth part may be folded toward the second side wall along respective corresponding broken lines in the folding manners of the sixth part 46 and the seventh part 47. Referring to FIG. 14, in FIG. 14, in the thickness direction z, the insulating film 14 has a part that exceeds the side wall 20, and the part that exceeds the side wall 20 may be folded toward the second end wall 21.

In some other embodiments, the insulating film 14 may not be disposed on the housing 11 through folding, the insulating film 14 may be set to be in a state corresponding to an outer contour of the housing 11, and the insulating film 14 is disposed on the housing 11 through nesting.

According to some embodiments of this application, this application further provides a battery. The battery includes the battery cell 10 described above.

According to some embodiments of this application, this application further provides a power-consuming apparatus. The power-consuming apparatus includes the battery described above, where the battery is configured to provide electric energy, and/or the power-consuming apparatus includes the battery cell described above.

In some embodiments, the power-consuming apparatus may include a battery, or may include a battery cell, or may include a battery and a battery cell.

According to some embodiments of this application, some embodiments of this application provide a battery cell 10. Referring to FIG. 3 to FIG. 8, the battery cell 10 includes a housing 11, an electrode terminal 12, a first connecting member 13, and an insulating film 14. The housing 11 includes a first end wall 110, a second end wall 21, and a side wall 20. The first end wall 110 is disposed opposite to the second end wall 21. The side wall 20 is disposed between the first end wall 110 and the second end wall 21. In some embodiments, the first end wall 110 may be a top cover of the housing 11. In some embodiments, the first connecting member 13 is an insulating member 13A, and the insulating member 13A is used as upper rubber in the battery cell 10. The electrode terminal 12 is disposed on the first end wall 110, and the insulating member 13A is disposed between the first end wall 110 and the electrode terminal 12. The insulating member 13A includes a base plate 130 and a side plate 131, the base plate 130 is disposed between the electrode terminal 12 and the first end wall 110 in the thickness direction z of the first end wall 110, the base plate 130 is provided with a third through-hole for the electrode terminal 12 to pass through, and the electrode terminal 12 passes through the third through-hole and is electrically connected to the electrode assembly 10a in the battery cell 10. The side plate 131 is disposed around the base plate 130 and is connected to the base plate 130. The side plate 131 is disposed around the electrode terminal 12, a convex portion 1310 is formed on an outer peripheral surface of the side plate 131, an outer surface of the first end wall 110 is provided with a first groove 1102, and the convex portion 1310 is accommodated in the first groove 1102. The insulating film 14 covers the first end wall 110 and the side wall 20 and covers a part of the second end wall 21. The insulating film 14 is provided with a second through-hole 140 that exposes the electrode terminal 12, to implement an electrical connection between the electrode terminal 12 and an external component. A part of the insulating film 14 located around the second through-hole 140 is in a hot-melting connection to the convex portion 1310. Because the insulating film 14 covers the first end wall 110 and the part of the insulating film 14 located around the second through-hole 140 is connected to the convex portion 1310, a protective effect on a part on the first end wall 110 on which the electrode terminal 12 is mounted can be improved, and a risk that the electrolyte leaks from the first end wall 110 and from the part on the first end wall 110 on which the electrode terminal 12 is mounted is reduced. In addition, even if the electrolyte leaks from the first end wall 110 and from the part on the first end wall 110 on which the electrode terminal 12 is mounted, reliability of the battery is improved because the disposition of the insulating film 14 can reduce a risk that the electrolyte leaks out of the insulating film 14. In addition, when the battery cell 10 is inverted and used, that is, when the first end wall 110 is a part of the housing 11 closest to the ground during use, the first groove 1102 is disposed on the outer surface of the first end wall 110 and the convex portion 1310 is accommodated in the first groove 1102, so that a part of the insulating film 14 connected to the convex portion 1310 is not a lowest part of the battery cell 10, thereby reducing a risk that the electrolyte leaking from the part on the first end wall 110 on which the electrode terminal 12 is mounted, or the electrolyte leaking from another part infiltrates into the part of the insulating film 14 connected to the convex portion 1310, further improving connection stability of the part of the insulating film 14 connected to the convex portion 1310, and reducing a risk that the electrolyte leaks or leaks outward. Therefore, the battery has high reliability.

According to some other embodiments of this application, some other embodiments of this application provide a battery cell 10. Referring to FIG. 9 and FIG. 10, a structure of a battery cell 10 provided in the some other embodiments is approximately the same as that of the battery cell 10 provided in the some embodiments described above. A difference lies in a first connecting member 13. The first connecting member 13 provided in the some other embodiments is not the insulating member 13A described above, and the first connecting member 13 may be a rubber member. A surface of the electrode terminal 12 is provided with a second groove 120, the second groove 120 extends in the circumferential direction of the electrode terminal 12, and the first connecting member 13 is disposed in the second groove 120. A part of the insulating film 14 located around the second through-hole 140 is in a hot-melting connection to a surface of the first connecting member 13.

In some embodiments, a sealing member 15, for example, a structure such as a sealant, may be disposed between the first end wall 110 and the insulating member 13A, in collaboration with disposing a bumpy matching structure between the first end wall 110 and the insulating member 13A, so that a risk that the electrolyte flows between the first end wall 110 and the insulating member 13A and acts on the electrode terminal 12 can be reduced, thereby reducing a risk that the electrode terminal 12 and the first end wall 110 are short-circuited, and improving reliability of the battery.

In some embodiments, the insulating film 14 may further collaborate with a structure having an insulating property, to protect another component that is on the housing 11 of the battery cell 10 and from which the electrolyte is prone to leak. For example, a pressure-relief portion 16 may be disposed on the first end wall 110, a second connecting member 17 may be disposed around the pressure-relief portion 16, and the insulating film 14 not only covers the pressure-relief portion 16, but also may be in a hot-melting connection to the third insulating film 14. Alternatively, for example, a liquid injection hole 1104 may be disposed on the first end wall 110, the liquid injection hole 1104 is sealed by a plugging member 18, a third connecting member 19 may be disposed around the liquid injection hole 1104, and the insulating film 14 not only covers the plugging member 18, but also may be in a hot-melting connection to the fourth insulating film 14.

The above descriptions are merely preferred embodiments of this application and are not intended to limit this application. For a person skilled in the art, this application may have various modifications and changes. Any modification, equivalent replacement, or improvement made without departing from the spirit and principle of this application shall fall within the protection scope of this application.

## Claims

1. A battery cell, comprising:
a housing comprising a first end wall, wherein the first end wall is provided with a first through-hole, and the first through-hole passes through the first end wall in a thickness direction of the first end wall;
an electrode terminal mounted in the first through-hole;
a first connecting member at least partially located on an outer side of the first end wall in the thickness direction, wherein the first connecting member is disposed in a circumferential direction of the electrode terminal and is connected to the electrode terminal; and
an insulating film covering at least a part of an outer surface of the first end wall, wherein the insulating film is provided with a second through-hole for exposing the electrode terminal, and the insulating film is connected to the first connecting member.

2. The battery cell according to claim 1, wherein
the insulating film is in a hot-melting connection to the first connecting member.

3. The battery cell according to claim 1 or 2, wherein
a part of the insulating film surrounding the second through-hole is connected to the first connecting member.

4. The battery cell according to any one of claims 1 to 3, wherein
the first connecting member is an insulating member, the first connecting member comprises a base plate and a side plate, the base plate is disposed between the electrode terminal and the first end wall in the thickness direction, the base plate is provided with a third through-hole for the electrode terminal to pass through, the side plate is disposed around the electrode terminal, and the side plate is connected to the base plate; and
the insulating film is connected to the side plate.

5. The battery cell according to claim 4, wherein
the side plate has a first surface away from the first end wall in the thickness direction, and the insulating film is connected to the first surface.

6. The battery cell according to claim 4, wherein
a convex portion is formed on an outer peripheral surface of the side plate, and the insulating film is connected to the convex portion.

7. The battery cell according to claim 6, wherein
the first end wall has the outer surface and an inner surface that are disposed opposite to each other in the thickness direction, the outer surface of the first end wall is provided with a first groove, at least a part of the convex portion is accommodated in the first groove, and a connecting surface between the insulating film and the convex portion is located in the first groove.

8. The battery cell according to any one of claims 4 to 7, wherein
the battery cell further comprises a sealing member, and the sealing member is disposed between the first end wall and the insulating member.

9. The battery cell according to claim 8, wherein
the insulating member comprises a bump, the first end wall is provided with a sealing groove, the bump is inserted in the sealing groove, and the sealing member fills a void between the bump and the sealing groove.

10. The battery cell according to claim 9, wherein
the bump and the sealing groove are both annular and are disposed in the circumferential direction of the electrode terminal.

11. The battery cell according to any one of claims 1 to 10, wherein
the electrode terminal comprises a first end face facing away from the first end wall in the thickness direction and an outer peripheral surface disposed around the first end face; and
the first connecting member is disposed on the first end face and/or the outer peripheral surface of the electrode terminal.

12. The battery cell according to claim 11, wherein
a surface of the electrode terminal is provided with a second groove, the second groove extends in the circumferential direction of the electrode terminal, and the first connecting member is disposed in the second groove.

13. The battery cell according to claim 12, wherein
the second groove is disposed on the first end face.

14. The battery cell according to claim 13, wherein
the second groove extends to the outer peripheral surface of the electrode terminal.

15. The battery cell according to claim 14, wherein
the insulating film does not exceed the first end face in the thickness direction.

16. The battery cell according to claim 12, wherein
the second groove is disposed on the outer peripheral surface of the electrode terminal.

17. The battery cell according to any one of claims 1 to 16, wherein
the battery cell further comprises a pressure-relief portion and a second connecting member, the pressure-relief portion is disposed on a wall portion of the housing, the insulating film covers the pressure-relief portion, the second connecting member is disposed on the wall portion of the housing and is disposed around the pressure-relief portion, and the second connecting member is connected to the insulating film.

18. The battery cell according to claim 17, wherein
the wall portion of the housing is provided with a third groove, the third groove is disposed around the pressure-relief portion, and the second connecting member is disposed in the third groove and is in a hot-melting connection to the insulating film.

19. The battery cell according to claim 17 or 18, wherein
the pressure-relief portion is disposed on the first end wall.

20. The battery cell according to any one of claims 1 to 19, wherein
the wall portion of the housing is provided with a liquid injection hole and a plugging member, the plugging member plugs the liquid injection hole, and the insulating film covers the plugging member; and
the battery cell further comprises a third connecting member, the third connecting member is disposed on the wall portion of the housing and is disposed around the liquid injection hole, and the third connecting member is connected to the insulating film.

21. The battery cell according to claim 20, wherein
the wall portion of the housing is provided with a fourth groove, the fourth groove is disposed around the liquid injection hole, and the third connecting member is disposed in the fourth groove and is in a hot-melting connection to the insulating film.

22. The battery cell according to claim 20 or 21, wherein
the liquid injection hole is disposed on the first end wall.

23. The battery cell according to any one of claims 1 to 22, wherein
the housing further comprises a side wall, and the side wall is disposed around the first end wall; and
the insulating film covers the outer surface of the first end wall and covers at least a part of an outer surface of the side wall.

24. The battery cell according to claim 23, wherein the housing further comprises a second end wall, the second end wall is disposed opposite to the first end wall, and the side wall connects the first end wall and the second end wall; and
the insulating film covers at least a part of an outer surface of the second end wall.

25. The battery cell according to claim 24, wherein
a part of the outer surface of the second end wall is not covered by the insulating film.

26. A battery, wherein
the battery comprises the battery cell according to any one of claims 1 to 25.

27. A power-consuming apparatus, comprising the battery according to claim 26 and/or the battery cell according to any one of claims 1 to 25.
